# EUROPÄISCHE PATENTSCHRIFT

(11) **EP 1 106 295 B1**
(45) Veröffentlichungstag und Bekanntmachung des Hinweises auf die Patenterteilung: **17.05.2006**
(21) Anmeldenummer: 00126415.9
(22) Anmeldetag: 05.12.2000
(51) Int. Cl.: B23K 9/10, B23K 9/09, H01M 8/00, H01M 8/22

(54) **Lichtbogenschweissvorrichtung und -verfahren mit Brennstoffzelle**
Arc welding device and method with fuel cell
Appareil et méthode de soudage à l'arc avec pile à combustible

(30) Priorität: 08.12.1999 US 457156
(43) Veröffentlichungstag der Anmeldung: 13.06.2001
(60) Teilanmeldung: 03021339.1
(73) Patentinhaber: LINCOLN GLOBAL, INC., Santa Fe Springs CA 90670 (US)
(72) Erfinder: Blankenship, George D., Chardon, Ohio 44024 (US)
(74) Vertreter: Althaus, Arndt

(56) Entgegenhaltungen:
- US-A- 4 861 965
- US-A- 4 972 064
- US-A- 5 086 208
- US-A- 5 599 638
- US-A- 5 992 008

## Beschreibung

Die Erfindung betrifft das elektrische Lichtbogenschweißen und insbesondere eine Lichtbogenschweißvorrichtung, gemäß dem Oberbegriff des Anspruchs 1 und ein Verfahren gemäß dem Oberbegriff des Anspruchs 27 (siche, z.B. US-A-5 086 208), die mittels einer brennstoffbetriebenen und transportablen Energiequelle mit Energie versorgt wird.

Die Patente US 4,861,965, US 4,972,064, US 5,148,001 und US 5,961,863 beschreiben beispielhaft Schweißvorrichtungen, die mit der erfindungsgemäßen Ausgestaltung einer transportablen Energiequelle verwendet werden können. Die bekannten Lichtbogenschweißvorrichtungen werden gewöhnlich dadurch mit Energie versorgt, daß sie an das Stromnetz angeschlossen werden oder mit einem gasbetriebenen elektrischen Generator ausgestattet werden. Schweißvorrichtungen, die an das elektrische Stromnetz angeschlossen werden sollen, können nur dort eingesetzt werden, an denen eine Anschlußnetzdose zur Verfügung steht, wobei die Anschlußnetzdose bzw. das Stromnetz derart bemessen sein muß, daß der zum Betreiben des Schweißbrenners benötige Strom geliefert wird. Die Mobilität einer an das Stromnetz angeschlossenen Lichtbogenschweißvorrichtung kann nur dadurch erhöht werden, daß die Schweißperson Verlängerungskabel zwischen Schweißvorrichtung und Netzanschluß einsetzt. Falls die Lichtbogenschweißvorrichtung ferngesteuert und/oder an Orten betrieben werden soll, die über keinen Stromanschluß bzw. über keine die benötigte Stromstärke aufweisenden Stromanschluß verfügen, betrieben werden soll, muß die Lichtbogenschweißvorrichtung mit ihrer eigenen Energiequelle wie z.B. einem elektrischen Gasgenerator ausgestattet werden, um den benötigten Strom für die Lichtbogenschweißvorrichtung zu erzeugen. Die eingesetzten Gasgeneratoren werden in der Regel mittels Mineralölbrennstoff wie Benzin betrieben. Unter zahlreichen Betriebsbedingungen reichen derartige mit zwei Energiequellen für die Lichtbogenschweißvorrichtung versehene Anordnungen aus, die Leistungsanforderungen für das Lichtbogenschweißvorrichtung zu erfüllen.

Lichtbogenschweißvorrichtungen, die in abgelegenen Orten, insbesondere in teilweise oder vollständig geschlossenen oder nicht durchlüfteten Orten eingesetzt werden sollen, erfordern eine spezielle Ausstattung für den Schweißbetrieb. In derartigen Orten wird zur Energieversorgung für die Schweißvorrichtung ein gasbetriebener elektrischer Generator verwendet. Während des Betriebs des gasbetriebenen Generators werden Abgase erzeugt, die beim Einatmen zu Gesundheitsschäden führen können. Außerdem erzeugen die gasbetriebenen Generatoren Lärm beim Betrieb. Dieser Lärm kann zu temporärem Gehörverlust führen, insbesondere wenn die Lichtbogenschweißvorrichtung in kleinen, geschlossenen Räumen über längere Zeit eingesetzt wird. Neben den gesundheitsschädlichen Wirkungen für den Schweißer erzeugt der Betrieb eines gasbetriebenen Elektrogenerators Verschmutzungen, die nachteilig und/oder schädlich für die Umwelt sind. Die Verschmutzung betrifft sowohl Lärm als auch Abgasprodukte aus der Verbrennung des Brennstoffs beim gasbetriebenen Generator. Einflüsse auf die Luftverschmutzung bestehen auch bei elektrisch betriebenen Lichtbogenschweißbrennern, da für diese die elektrische Energie meist mittels Kohle- oder Atomkraftwerken erzeugt wird, die jeweils die ihnen eigenen Umweltrisiken bergen. Zusätzlich zu den Bedenken hinsichtlich der Luftverschmutzung der Energiequellen steigen auch deren Erzeugungskosten zunehmend. Da sich die Öl- und Kohlevorräte weltweit vermindern, werden die Kosten für Benzin und für durch Kohleverfeuerungsgeneratoren erzeugte Elektrizität unvermindert ansteigen. Steigende Energiekosten verlangsamen bzw. hemmen Wachstum in der Industrie.

Obwohl die vorgenannten Probleme seit geraumer Zeit existieren, wurden bis heute keine durchsetzungsfähigen Alternativen zu gasbetriebenen elektrischen Generatoren für Lichtbogenschweißvorrichtungen oder zu solchen, die an ein elektrisches Netz angeschlossen werden, vorgeschlagen. Batteriebetriebene Lichtbogenschweißvorrichtungen sind extrem unhandlich und haben eine begrenzte Lebenszeit. Außerdem muß die Batterie, nachdem sie entladen wurde, entsorgt werden, so daß die Batterie selbst eine Umweltbelastung darstellt. Zusätzlich benötigen viele Batterien konzentrierte Säuren, die gesundheitsschädlich sind, falls Säuredämpfe eingeatmet werden oder falls die Säure in Kontakt mit menschlicher Haut gelangt. Schließlich stellt die Säure auch eine Umweltbelastung dar, die eine spezielle und kostenintensive Entsorgung erfordert. Solarenergie ist eine weitere Energiequelle, jedoch ist deren Einsatz bei elektrischen Lichtbogenschweißvorrichtungen bisher nicht verwirklichbar. Die Solarkollektorengröße, die notwendig wäre, um die benötigte Energiemenge zu erzeugen, ist zu groß, insbesondere für den Einsatz in begrenzten Einsatzorten. Außerdem brauchen die Solarkollektoren Sonnenlicht, so daß die Solarbatterien an bewölkten Tagen oder in geschlossenen Räumen die notwendige elektrische Energie nicht erzeugen werden. Auch die hohen Kosten der Solarkollektoren verhindern aus Kostengründen deren Einsatz bei Lichtbogenschweißvorrichtungen. Auch windbetriebene Generatoren sind aufgrund ihrer sperrigen Konstruktion und ihrem zwingenden Bedarf für eine kontinuierliche Windquelle ungeeignet. Die Unhandlichkeit der Batterien, Solarkollektoren und windbetriebenen Generatoren vereinigen in sich die spezifischen, bestehenden Größenprobleme bei Lichtbogenschweißvorrichtungen. Der elektrische Schaltungsaufbau in der Schweißvorrichtung ist aufgrund der Leistungsanforderungen von Lichtbogenschweißvorrichtungen auf eine bestimmte Größe begrenzt. Lichtbogenschweißbrenner, die Schutzgas benötigen, umfassen sperrige Kanister für die Schutzgasversorgung. Die Kombination sperriger Schutzgaskanister mit einer sperrigen Energiequelle würde die Lichtbogenschweißvorrichtung zu unhandlich für den Einsatz in zahlreichen Einsatzorten machen.

Angesicht der mit alternativen Energiequellen für elektrische Lichtbogenschweißvorrichtungen verbundenen Probleme besteht ein Bedarf für eine verbesserte Energiequelle, die umweltfreundlich, einfach aufgebaut und sicher zu betreiben ist, und die unter zahlreichen Einsatzbedingungen eingesetzt werden kann.

Aus der US-A-5 086 208 ist eine Schweißpistole für eine Lichtbogenschweißvorrichtung bekannt. Die Schweißpistole hat ein Gehäuse mit einem Aufnahmeraum für eine motorangetriebene Schweißdrahtspule. Die Schweißpistole ist mit zwei Anschlußklemmen versehen, die an den Polklemmen einer herkömmlichen Autobatterie angeklemmt werden können, wobei die Schweißpistolenspitze elektrisch mit der ersten der beiden Anschlußklemmen verbunden ist. Eine dritte Anschlußklemme kann am Werkstück angeklemmt werden, wobei diese dritte Anschlußklemme für den Lichtbogenschweißvorgang mit der zweiten Anschlußklemme kurzgeschlossen ist. Die Schweißpistole umfaßt ferner einen Anschluß für eine Schutzgasquelle. Die Schutzgasquelle muß separat von der Schweißvorrichtung und der Energiequelle für die Schweißvorrichtung zur Verfügung gestellt werden.

Zusammengefaßt betrifft die Erfindung ein Verfahren und eine Vorrichtung zum Zusammenschweißen von Metallplatten durch Lichtbogenschweißen. Hauptaufgabe der Erfindung ist es, ein Lichtbogenschweißsystem und -verfahren zu schaffen, das eine hochqualitative Schweißraupe zwischen zwei Metallplatten ausbildet. Das Lichtbogenschweißsystem und -verfahren soll hierbei umweltfreundlich sein, und im Betrieb die Geräuschbelastung und Umweltverschmutzung reduzieren. Außerdem soll das Lichtbogenschweißsystem und -verfahren unter zahlreichen Einsatzbedingungen verwendet werden können und transportabel sein.

Diese und weitere Aufgaben werden für die Lichtbogenschweißvorrichtung durch die in Anspruch 1 angegebene Erfindung und für das Verfahren durch die in Anspruch 27 angegebene Erfindung gelöst.

Erfindungsgemäß ist hierbei vorgesehen, daß die Lichtbogenschweißvorrichtung bzw. das -verfahren eine Brennstoffzelle als Energiequelle verwenden, mit der die Lichtbogenschweißvorrichtung vollständig oder teilweise mit Energie versorgt wird.

Mit Brennstoffzellen im allgemeinen beschäftigen sich beispielsweise die Patente US 5,509,638, US 5,656,388, US 5,773,162, US 5,795,496, US 5,888,665, US 5,928,806 sowie die PCT-Anmeldungen WO98/22989, WO98/45694, WO99/16137 und WO99/39841. Der Offenbarungsgehalt dieser Patente bzw. Patentanmeldungen wird in die vorliegende Anmeldung eingeschlossen, um die Herstellung der Brennstoffzellenkomponenten und den Betrieb von Brennstoffzellen im einzelnen zu beschreiben.

Gemäß einer bevorzugten erfindungsgemäßen Ausführungsform wird eine Brennstoffzellen-Energiequelle mit einem Pluspol und einem Minuspol und einem Schweißstromschaltkreis geschaffen, mit dem ein Schweißstrom zwischen Schweißelektrode und Werkstück angelegt werden kann. Die Brennstoffzelle ist eine elektrochemische Zelle, in der die aus einem Brennstoffoxidationsprozeß resultierende freie (chemische) Energie in elektrische Energie umgewandelt wird. Bei einer Ausführungsform handelt es sich um eine Organische/Luft-Brennstoffzelle, die an der Anode organischen Brennstoff zu Kohlendioxyd oxidiert, während an der Kathode Luft oder Sauerstoff zu Wasser reagieren (Reduktion). Brennstoffzellen, die organische Brennstoffe verwenden, sind wegen der hohen spezifischen Energie der organischen Brennstoffe äußerst attraktiv. Bei den Brennstoffzellen kann es sich hierbei um eine "indirekte" oder "Reformer"-Brennstoffzelle oder um eine "Direktoxidations"-Brennstoffzelle handeln. Bei einer indirekten Brennstoffzelle wird der Brennstoff katalytisch reformiert und weiterverarbeitet. Bei organischen Brennstoffen wird der Brennstoff katalytisch reformiert und in kohlenmonoxydfreien Wasserstoff umgewandelt, wobei der derart erhaltene Wasserstoff an der Anode der Brennstoffzelle oxidiert. Bei der Brennstoffzelle mit direkter Oxidation wird der Brennstoff ohne vorherige chemische Modifikationen direkt in die Brennstoffzelle eingespeist, in der der Brennstoff dann an der Anode oxidiert. Brennstoffzellen mit direkter Oxidation erfordern keine Brennstoffvorbehandlungsstufe. Insgesamt sind Brennstoffzellen mit direkter Oxidation weniger kompliziert aufgebaut und bauen kleiner als indirekte Brennstoffzellen.

Gemäß einem weiteren Erfindungsaspekt weisen die Brennstoffzellen Anoden und/oder Kathoden mit elektrokatalytischen Hartmantelflächen auf(high-surface-area electro-catalytic anodes or cathodes). Bei einer Ausgestaltung umfaßt die Anoden- und/oder Kathodenherstellung das Vorsehen einer Hartmantelfläche mit Metallstaub auf einer Unterschicht auf Kohlenstoffbasis. Hierzu kann Legierungsstaub zusammen mit einem TEFLON-Bindemittel auf eine Kohlenstofffaserverstärkte Unterlage aufgebracht werden, um eine Gasdiffusions-Anode und/oder -Kathode zu erzielen. Die Anode und/oder Kathode kann auch für gasförmige und/oder flüssige Versorgungsmaterialien eingesetzt werden. Weiter vorzugsweise kann die Anode und/oder Kathode stark porös sein, um eine saubere Benetzung der Poren zu erlauben.

Gemäß einer weiteren erfindungsgemäßen Ausgestaltung können die Anode und/oder Kathode der Brennstoffzelle mit einer Substanz beschichtet sein, die die Benetzungseigenschaften der Elektrode verbessern. Im Zusammenhang mit diesem besonderen erfindungsgemäßen Aspekt können die Anode und/oder Kathode mit einem perfluorinierte Sulfonsäure aufweisenden Material beschichtet sein, um die Benetzungseigenschaften der Anode und/oder Kathode zu steigern. Die Beschichtung senkt die Grenzflächenspannung an der Grenzfläche zwischen Flüssigkeit und Katalysator und führt zu einer gleichmäßigeren Benetzung der Anoden- und/oder Kathodenporen und -partikel durch das flüssige Brennstoffgemisch, wodurch eine verbesserte Ausnutzung des Elektrokatalysators hervorgerufen wird. Die Beschichtung sorgt auch für den Ionendurchgang an der Feststoff-Elektrolytmembran und erlaubt einen effizienten Transport der durch den Brennstoff-Oxidationsprozeß erzeugten Protonen oder Hydronium-Ionen. Die Beschichtung kann ferner die Freisetzung von Kohlendioxyd an den Poren der Anode und/oder Kathode erleichtern. Durch Verwenden einer perfluorinierten Sulfonsäure werden Anionengruppen nicht allzu stark an der Anoden- und/oder Kathoden-Elektrolytengrenzfläche absorbiert. Die Kinetik der Elektrooxidation des Methanol ist folglich leichter möglich als bei Schwefelsäure-Elektrolyten. Weitere hydrophile, protonleitende Zusätze mit den gewünschten Eigenschaften, die alternativ oder in Kombination mit perfluorinierter Sulfonsäure eingesetzt werden können, umfassen Montmorillonit, verätherte Zellulose (Alkoxycelluloses), Cyclodextrin, Mischungen aus Zeolith und/oder Zirkoniumwasserstoffphosphate.

Gemäß einem weiteren Erfindungsaspekt kann in der Brennstoffzelle ein flüssiger Brennstoff verwendet werden. Bei einer Ausgestaltung erfährt der flüssige Brennstoff innerhalb der Brennstoffzelle eine saubere und effiziente elektrochemische Oxidation. Für direkt oxidierende Brennstoffzellen wird die effiziente Ausnutzung der organischen Brennstoffe durch die Leichtigkeit beherrscht, mit der die organischen Bestandteile anodisch innerhalb der Brennstoffzelle oxidiert werden. Der organische Brennstoff kann insbesondere aus Methanol, Formaldehyd, Formylsäure, Trimethoxymethan, Dimethoxymethan und/oder Trioxan bestehen.

Bei der Brennstoffzelle kann es sich auch um eine direkte, flüssigkeitsgespeiste Brennstoffzelle handeln, die keinen Säureelektrolyten benötigt. Ein Feststoff-Polymermembran-Elektrolyt kann eingesetzt werden, um auf den Säureelektrolyten verzichten zu können. Der feste Polymermembran-Elektrolyt kann zusammen mit einer batterieartigen Anode, die porös ist und zum Benetzen des Brennstoffs geeignet ist, eingesetzt werden. Ein batterieartiger Anodenaufbau und eine Kathode können auch mit beiden Seiten des Feststoff-Polymermembran-Elektrolyten verbunden sein. Ein Gemisch eines organischen Zuführmittels, das im wesentlichen säurefrei ist, wird an der Anodenseite der Anordnung vorbeigeführt. Die Feststoff-Polymermembran ist derart berechnet, daß sie ausgezeichnete elektrochemische und mechanische Stabilität und hohe Ionenleitfähigkeit hat und sowohl als Elektrolyt als auch als Separator fungiert. Außerdem wird die Kinetik der Elektrooxidation des organischen Zuführmittels und die Elektroreduktion von Luft oder Sauerstoff an der Grenzfläche zwischen Anoden und/oder Kathoden und Elektrolytenmembran stärker erleichtert als an der Grenzfläche zwischen Anoden bzw. Kathoden und Schwefelsäure, wenn ein organisches Zuführmittel wie Methanol eingesetzt wird. In weiterer Ausgestaltung handelt es sich bei dem festen Polymerelektrolyten um eine protonleitende, Kationen austauschende Membran. Bei dieser Ausgestaltung kann die Membran insbesondere Tetrafluorethylen, ein perfluoriniertes Sulfonsäurepolymer, eine Polysterensulfonsäure, ein Polyvinylfluorid, eine Polykohlenwasserstoff-Sulfonsäure und/oder ein Copolymer aus Tetrafluorethylen und Perfluorvinylether-Sulfonsäure umfassen. In weiterer Ausgestaltung können die einsetzbaren Membranen aus modifiziertem perfluoriniertem Sulfonsäure-Polymer oder Polykohlenwasserstoffsulfonsäure ein sulfoniertes Polyether-Ether-Keton und/oder ein Polyvinylen-Ethersulfon aufweisen. Ferner kann die Austauschmembran aus einem Verbund aus zwei oder mehr unterschiedlichen Protonenaustauschmembranen gebildet werden. Die Membran erlaubt vorzugsweise den Betrieb der Brennstoffzelle bei Temperaturen bis wenigstens 120°C. Ferner ist die Brennstoffzelle vorzugsweise im wesentlichen frei von teuren, rostbeständigen Bauteilen, da keine Säureelektrolyten vorhanden sind. Die Membrandicke liegt vorzugsweise zwischen 0,05 und 1 mm.

Gemäß einer weiteren erfindungsgemäßen Ausgestaltung ist die Anode der Brennstoffzelle aus Hartmantelflächenpartikeln mit Legierungen auf Platin-Basis und mit edlen oder nichtedlen Metallen gebildet. Hierbei können binäre oder ternäre Zusammensetzungen für die Elektrooxidation des organischen Brennstoffs verwendet werden. Die Platinlegierung für die Anode kann Zusammensetzungen mit 10-90 % Platin enthalten. Die Platinlegierung kann Ruthenium, Zinn, Iridium, Osmium und/oder Rhenium enthalten. Das Platin oder Teile des Platins in der Platinlegierung können durch Paladium, Wolfram, Rhodium, Eisen, Kobalt, Titan, Iridium, Chrom, Mangan, Molybdän, Niob, Zirkonium, Osmium, Titanoxyd und/oder Nickel ersetzt sein. Alternativ können die Platinlegierungspartikel auch in Gestalt feinen Metallstaubs, d.h. "ununterstützt" und/oder auf einem Hartmantelflächenmaterial abgestützt sein. Das Hartmantelflächenmaterial kann hierbei ein Karbonmaterial umfassen. Die Platinlegierung kann der Elektrokatalysatorschicht im Bereich von etwa 0,05 - 4, 0 mg/cm² zugesetzt sein. Ferner können der Platinlegierung Partikel aus Titanoxyd, Iridium und/oder Osmium zusetzt sein, um die Brennstoffzellenleistungsfähigkeit zu verbessern. Die gemittelte Durchschnittsgröße der Partikel an der Anode liegt bei etwa 0,5 - 8 µm.

Gemäß einem weiteren Erfindungsaspekt ist die Kathode der Brennstoffzelle aus Partikeln gebildet, die Platin, auf Träger oder trägerlos, in der protonendurchlässigen Membran aufweisen. Die Platinpartikel können auf einem Trägermaterial, das Karbon enthält, aufgebracht sein. Die Kathode kann Materialien aufweisen, die die Hydrophobie der Kathode steigern. Das die Hydrophobie steigernde Material kann Tetrafluorethylen sein. Die Platinpartikel können der Elektrokatalysatorschicht im Bereich von etwa 0,05 - 4,0 mg/cm² zugesetzt sein. Die Durchschnittsgröße der Partikel an der Kathode liegt bei etwa 0,5 - 8 µm.

Gemäß einem weiteren erfindungsgemäßen Aspekt handelt es sich bei der Brennstoffzelle um eine regenerierende Brennstoffzelle. Die Brennstoffzelle kann Kohlendioxyd zu sauerstoffangereichertem Kohlenwasserstoff und Sauerstoff reduzieren. Die sauerstoffangereicherten Kohlenwasserstoffe können Methylalkohol, Methylformat, Formaldehyd und/oder Formylsäure aufweisen.

Gemäß einer weiteren erfindungsgemäßen Ausgestaltung werden eine Mehrzahl von Brennstoffzellen zu einem Zellenstapel (stack) zusammengefaßt, um die mittels der Brennstoffzellen erzeugte Spannung und/oder den erzeugten Strom zu steigern. Hierzu können eine Mehrzahl von Brennstoffzellen parallel geschaltet werden. Alternativ können eine Mehrzahl von Brennstoffzellen in Reihe geschaltet werden.

Erfindungsgemäß wird eines oder werden mehrere Reaktionsprodukte der Brennstoffzelle zumindest teilweise als Schutzgas für die Lichtbogenschweißvorrichtung verwendet. Das von der Brennstoffzelle erzeugte Schutzgas kann hierbei insbesondere Kohlendioxyd und/oder Kohlenmonoxyd umfassen. Ein Entfeuchter, ein Kondensor und/oder eine Reinigungseinrichtung werden eingesetzt, um unerwünschte Gase und/oder Flüssigkeiten aus dem gasförmigen Reaktionsprodukt zu entfernen, bevor dieses dem Schweißbad zugeführt wird. Ein Schutzgasregler kann eingesetzt werden, um die dem Werkstück zugeführte Schutzgasmenge zu regulieren und/oder den Druck des Schutzgases am Werkstück zu steuern.

Bei der Schweißelektrode kann es sich um eine abschmelzende Elektrode handeln. Gemäß einer Ausführungsform kann die abschmelzende Elektrode eine Elektrode mit Flußmittelseele sein, die ein Flußsystem innerhalb des Elektrodenkerns aufweist, um während des Schweißprozesses für die Schutzgasversorgung und/oder die gewünschte Schlacke zu sorgen. Die abschmelzende Kernelektrode kann Metallegierungen im Kern aufweisen, um eine Schweißraupenzusammensetzung zu erhalten, die im wesentlichen ähnlich zu der Zusammensetzung der zusammengeschweißten Werkstücke ist. Eine Schweißraupe, die eine Zusammensetzung hat, die annähernd der Zusammensetzung der Werkstücke entspricht, bildet eine starke, strapazierfähige und hochqualitative Schweißverbindung aus. Alternativ kann es sich bei der abschmelzenden Elektrode auch um eine flußmittelbeschichtete Elektrode oder eine massive Metallelektrode handeln.

Nach einem weiteren erfindungsgemäßen Aspekt ist der Schweißschaltkreis zum Einsatz in einer Kurzschlußlichtbogenschweißvorrichtung ausgelegt. Der Schweißschaltkreis kann eine erste Schaltung zum Steuern des Stromflusses während des Kurzschlußzustandes aufweisen, bei welchem geschmolzenes Metall am abschmelzenden Elektrodenkernende hauptsächlich mittels eines Übertragungsstroms durch einen Oberflächenspannungsvorgang in das aufgeschmolzene Metallbad übertragen wird. Der Übertragungsstrom kann hierbei einen Hochstrom-Pinchpuls quer zum kurzgeschlossenen geschmolzenen Material aufweisen, der den Übergang des geschmolzenen Materials von der Elektrode zum Schweißbad erleichtert. Der Schweißstromschaltkreis kann in weiterer Ausgestaltung eine zweite Schaltung umfassen, um einen Schmelzstrom zu erzeugen. In bevorzugter Ausgestaltung handelt es sich beim Schmelzstrom um einen Hochstrompuls, der durch den Lichtbogen geführt wird. Der Hochstrompuls hat eine vorbestimmte Energiemenge oder Menge an aufgenommener Leistung, die zum Schmelzen eines relativ konstanten Metallvolumens am abschmelzenden Elektrodenende verwendbar ist, wenn die Elektrode im Abstand vom Schweißbad gehalten wird. Bei einer anderen Ausgestaltung kann die zweite Schaltung des Schweißstromschaltkreises während des Anfangsabschnitts des Lichtbogenzustandes für eine hochenergetische Zusatzspannung (boost) sorgen. Der Hochstrom-Boost hat mit I (t) eine vorbestimmte Energiefläche zum Schmelzen eines vergleichsweise konstanten Metallvolumens am abschmelzenden Drahtende, wenn der Draht im Abstand vom Schweißbad ist. Die während der Hochstromzusatzspannung bzw. beim Plasma-Boost erzeugte Energie reicht aus, einen kugelförmigen Metallball zu schaffen, dessen Durchmesser kleiner als der doppelte Durchmesser des Schweißdrahtes ist. In weiterer Ausgestaltung kann, im Anschluß an den anfänglichen Hochstrom-Boost, ein Hochstrom für eine vorbestimmte Zeitperiode aufrechterhalten werden und dann nachfolgend reduziert werden, so daß der Elektrode die gewünschte Energie- oder Leistungsmenge zugeführt wird, um das gewünschte Elektrodenvolumen abzuschmelzen. In besonderer Ausgestaltung dieser Ausführungsform findet die Reduzierung des Hochstroms in Form eines um eine Zeitperiode verzögerten Stroms statt. Alternativ kann der Schweißstromschaltkreis die der Elektrode zugeführte Energiemenge begrenzen, um unerwünschtes Aufschmelzen am Elektrodenende bzw. an den Werkstückrändern zu verhindern.

In weiterer erfindungsgemäßer Ausgestaltung kann der Schweißstromschaltkreis eine Schaltung zum Erzeugen eines Hintergrundstroms aufweisen. Hierbei kann der Hintergrundstrom ein Niedrigstrom sein, der auf einem Niveau aufrechterhalten wird, das gerade oberhalb des zum Aufrechterhalten eines Lichtbogens nach Beendigung des Kurzschlußzustandes notwendigen Niveaus liegt. In weiterer Ausgestaltung kann der Hintergrundstrom während des gesamten Schweißzyklus aufrechterhalten bleiben, um sicherzustellen, daß der Lichtbogen während des Schweißens nicht unbeabsichtigt erlischt.

Der Schweißschaltkreis kann gemäß einer weiteren erfindungsgemäßen Ausgestaltung eine Schalteinrichtung zum Umschalten von Polaritäten während des Schweißprozesses umfassen. In einer ersten Ausgestaltung können die Dauer der Pulse mit positiver und negativer Polarität während eines einzelnen Schweißzyklus gleich sein. Alternativ kann die Dauer des Pulses mit positiver bzw. negativer Polarität während eines einzelnen Schweißzyklus unterschiedlich sein. Hierbei kann ein Puls mit positiver Polarität während eines ersten Schweißzyklus und ein Puls mit negativer Polarität während eines anderen Schweißzykluses auftreten. Die Schalteinrichtung kann softwaremäßig gesteuert werden.

Gemäß einer weiteren bevorzugten erfindungsgemäßen Ausgestaltung wird eine STT-Schweißvorrichtung der Anmelderin (The Lincoln Electric Company) oder ein STT-Kurzschlußschweißprozeß eingesetzt. Der STT-Prozeß kann zusammen mit einer Kernelektrode eingesetzt werden. Alternativ kann beim STT-Prozeß eine abschweißende Elektrode verwendet werden und die Polarität an der Elektrode ist negativ. Beim Verwenden des Negativelektrodenprozesses beim STT-Schweißer ist der Werkstückpuddel heiß und das Kühlen des Puddels benötigt Zeit, die es erlaubt, die Schweißraupe zurückzuziehen. Gemäß einer erfindungsgemäßen Ausgestaltung kann der Hintergrundstrom reduziert werden, um die Hitze im Puddel zu reduzieren. Die Stromkorrektur senkt die Hitzemenge im gesamten Schweißprozeß. Durch Umdrehen der Polarität beim STT-Schweißer zu einem Positivelektrodenzustand kann der Werkstückpuddel zu kalt werden. Um dieses Schweißpuddelabkühlen zu überwinden, schaltet die STT-Schweißvorrichtung bzw. der STT-Schweißprozeß zwischen der normalerweise vorhandenen negativen Polarität der Elektrode auf positive Polarität während des Schweißprozesses. Auf diese Weise wird die Hitze gesteuert, ohne daß das Hintergundstromniveau geändert wird. Die Puddelhitze wird durch Einstellen des Verhältnisses zwischen negativ und positiv geschalteter Elektrode auf eine vorgewählte Temperatur beim Schweißen geregelt.

In alternativer Ausgestaltung kann es sich bei der Elektrode um eine nichtverbrauchende Elektrode handeln. Die nichtverbrauchende Elektrode weist vorzugsweise Wolfram auf.

In weiterer erfindungsgemäßer Ausgestaltung kann der Schweißschaltkreis zum TIG-Schweißen ausgebildet sein. Bei einer Ausführungsform kann der Schweißschaltkreis die Polarität während des Schweißprozesses umschalten. In weiterer Ausgestaltung kann die Dauer der Pulse mit positiver Polarität und der Pulse mit negativer Polarität während eines Schweißzyklus gleich sein. Alternativ kann sich während eines Schweißzyklus die Dauer der Pulse mit positiver Polarität von der Dauer der Pulse mit negativer Polarität unterscheiden. In weiterer alternativer Ausgestaltung kann der Schweißschaltkreis Gleichstrom in Wechselstrom umwandeln. In besonderer Ausgestaltung dieser Ausführungsform kann die Stromumschaltung mit Hochgewindigkeitsleistungsschaltern verwirklicht sein, bei denen zumindest ein Schalter leitend ist, wenn zumindest ein anderer Schalter nichtleitend ist bzw. umgekehrt. In weiterer besonderer Ausgestaltung dieser Ausführungsform kann der Schweißschaltkreis eine Hochblindwiderstandsdrossel (high reactance reactor) bzw. Drosselspule (choke) mit ersten und zweiten Abschnitten aufweisen, wobei der erste Abschnitt für einen Heizzyklus parallel zur Energiequelle in Richtung der negativen Polarität angeschlossen wird und anschließend der Vorgang durch Anlegen des zweiten Abschnitts der Drosselspule bzw. choke parallel zum Werkstück in entgegengesetzter Richtung umgekehrt wird. Bei dieser Ausführungsalternative kann die Stromumschaltung softwaremäßig gesteuert sein.

Gemäß noch einer weiteren Ausführungsalternative weist der Schweißschaltkreis eine Zusatzspannungs-Kompensationsschaltung (boost-buck circuit) auf, um die von der Schweißstromversorgung zur Elektrode geleitete Spannung zu steigern.

Zusammengefaßt kann festgehalten werden, daß mit der Erfindung ein Lichtbogenschweißsystem und -verfahren geschaffen werden, das eine Brennstoffzelle aufweist, die zumindest teilweise die Energie zum Erzeugen eines Lichtbogens zwischen Elektrode und Werkstück erzeugt. Das Lichtbogenschweißsystem und -verfahren kann hierbei eine Brennstoffzelle mit direkter Oxidation umfassen. Als weiterer Vorteil erzeugt die Brennstoffzelle ein oder mehrere gasförmige Nebenprodukte, die zumindest teilweise als Schutzgas verwendet werden. Das Lichtbogenschweißsystem und -verfahren kann eine Brennstoffzelle aufweisen, die ein organisches, flüssiges Zuführmaterial verwendet. Die Brennstoffzellen können als Zellenstapel eingesetzt werden. Mit dem Lichtbogenschweißsystem und -verfahren kann erfindungsgemäß ein gewünschtes Stromprofil während des Werkstückschweißens nachgefahren werden. Die Brennstoffzelle weist zumindest eine protonleitende Membran zwischen Anode und Kathode der Brennstoffzelle auf. Die protonleitende Membran kann eine Migration des organischen Zuführmaterials für die Brennstoffzelle durch die Membran hindurch verhindern. In erfindungsgemäßer Ausgestaltung wird ein Kurzschluß-Lichtbogensschweißsystem und -verfahren geschaffen, mit dem eine steuerbare Energiemenge der Elektrode zugeführt wird, um eine Schweißraupe an dem Werkstück zu bilden. Ferner kann eine Schweißraupe erzeugt werden, die im wesentlichen eine Zusammensetzung hat, die ähnlich zu der Zusammensetzung des Werkstücks ist. Beim Lichtbogenschweißsystem und -verfahren kann eine Kernelektrode eingesetzt werden, um eine hochqualitative Schweißraupe auszubilden. Ferner kann die Polarität des Schweißstromes während des Schweißprozesses umgeschaltet werden. Die Hitze des Schweißpuddels kann durch Einstellen des Verhältnisses zwischen positivem Elektrodenstrom und negativem Elektrodenstrom sowohl während eines Schweißzyklus als auch von Schweißzyklus zum nächsten Schweißzyklus eingestellt werden. Ferner wird ein Lichtbogenschweißsystem und -verfahren geschaffen, das die der Elektrode zugeführte Leistung steigern kann. Diese und andere Vorteile werden für den Fachmann aus der nachfolgenden Beschreibung der in der Zeichnung gezeigten Ausführungsbeispiele deutlich.

Es wird nun Bezug genommen auf die Zeichnung, in der bevorzugte Ausführungsbeispiele dargestellt sind, die die Erfindung in ihrer Gesamtheit, in ihren Einzelteilen oder in der Anordnung ihrer Einzelteile einnehmen kann. In der Zeichnung zeigen:
**Fig. 1** eine schematische Ansicht einer Lichtbogenschweißvorrichtung, der Energieversorgung mittels einer Brennstoffzelle bewirkt wird, wobei die Brennstoffzelle nach einem bevorzugten erfindungsgemäßen Ausführungsbeispiel Schutzgas an den Lichtbogenschweißbrenner liefert;
**Fig. 2** eine schematische Darstellung einer Lichtbogenschweißvorrichtung, deren Energieversorgung mittels eines Mehrzellen-Brennstoffzellensystems bewirkt ist, das eine Mehrzahl von flüssigkeitsgespeisten organischen Brennstoffzellen verwendet und einen Schweißschaltkreis umfaßt, der den Strom und/oder die Spannung an der Elektrode regelt;
**Fig. 3** ein Kurvendiagramm, das die Performance der flüssigkeitsgespeisten Brennstoffzelle aus Fig. 1 in Leistung (in Volt) über Stromdichte wiedergibt;
**Fig. 4** ein Kurvendiagramm, das die Performance im Verhältnis Spannungsdichte zu Stromdichte bei der flüssigkeitsgespeisten Brennstoffzelle aus Fig. 1 wiedergibt;
**Fig. 5** ein Kurvendiagramm, das die Belastungsscharakteristik und das Einschwingverhalten der flüssigkeitsgespeisten Brennstoffzelle aus Fig. 1 wiedergibt;
**Fig. 6** eine schematische Darstellung der Lichtbogenschweißvorrichtung nach Fig. 2, wobei der Schweißschaltkreis ein Schweißsteuerungssystem und einen Fremdleistungswandler umfaßt;
**Fig. 7** eine schematische Darstellung eines Lichtbogenschweißbrenners nach Fig. 2, wobei der Schweißschaltkreis ein Schweißsteuerungssystem und einen Zusatzspannungs-Kompensationswandler umfaßt;
**Fig. 8, 9, 10** alternative Ausführungsbeispiele von vereinfachten Schaltungsdiagrammen, die zeigen, wie der Schweißschaltkreis aus Fig. 1 die Wellenform des Schweißstroms an der Elektrode der Lichtbogenschweißvorrichtung steuern kann, und
**Fig. 11** ein weiteres alternatives Ausführungsbeispiel eines vereinfachten Schaltungsdiagramms, das einen in den Schweißschaltkreis aus Fig. 1 eingebauten Polaritätsinverter umfaßt.

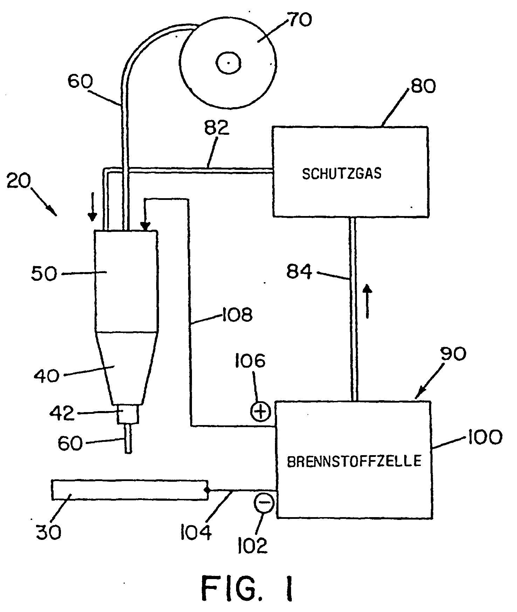

Fig. 1 zeigt eine elektrische Lichtbogenschweißvorrichtung 20 zum Zusammenschweißen von zwei oder mehr Werkstücken 30. Die Lichtbogenschweißvorrichtung 20 weist einen Schweißkopf 40 und ein Schweißbrennergehäuse 50 auf. Schweißkopf 40 umfaßt eine Düse 42. Die Düse 42 erleichtert das Ausrichten der Elektrode auf das Werkstück. Eine abschweißende Elektrode 60 wird von einer Schweißdrahtrolle 70 abgerollt und in das Schweißbrennergehäuse 50 hineingeführt. Die abschweißende Elektrode durchtritt das Schweißbrennergehäuse 50, verläßt dieses durch den Schweißkopf 40 und wird mittels der Düse 42 zum Werkstück 30 hingeführt. Ein nicht dargestelltes Schweißdrahtzuführsystem steuert die Zuführrate der Elektrode während des Schweißprozesses. Ein Schutzgas wird dem Schweißbrennergehäuse 50 über eine Gasleitung 82 zugeführt, die an eine Schutzgasquelle 80 angeschlossen ist. Ein nicht dargestellter Schutzgassteuermechanismus steuert während des Schweißprozesses die Durchflußrate des Schutzgases, d.h. des Kohlendioxyds, zum Werkstück. Die Lichtbogenschweißvorrichtung wird mittels einer elektrischen Energiequelle 90 mit Energie versorgt. Im Ausführungsbeispiel nach Fig. 1 besteht die elektrische Energiequelle 90 aus einer einzigen Brennstoffzelle 100; die Brennstoffzelle 100 könnte jedoch auch in Kombination mit einer Vielzahl von Brennstoffzellen und/oder mit anderen elektrischen Energiequellen verwendet werden, um die Lichtbogenschweißvorrichtung mit Energie zu versorgen. Die Brennstoffzelle erzeugt im gezeigten Ausführungsbeispiel einen Gleichstrom, wie dies mittels des Pluspols und Minuspols an der Brennstoffzelle verdeutlicht ist. Der Minuspol 102 ist über das Kabel 104 am Werkstück 30 angeschlossen. Der Pluspol 106 ist über Kabel 108 am Schweißbrennergehäuse 50 angeschlossen. Es versteht sich, daß die Brennstoffstelle 100 auch zum Erzeugen eines Wechselstroms ausgelegt sein könnte. Im Ausführungsbeispiel erzeugt die Brennstoffzelle 100 ein Reaktionsprodukt, das der Schutzgasquelle 80 über Gasleitung 84 zugeführt wird. Die Erzeugung des Reaktionsproduktes durch die Brennstoffzelle wird weiter unten noch erläutert werden. Die Hauptkomponenten des Lichtbogenschweißvorrichtung, d.h. Elektrode, Schweißkopf, Schweißbrennergehäuse usw. sind Standardbauteile von Lichtbogenschweißvorichtungen, so daß auf eine weitere Beschreibung hier verzichtet wird.

Die Brennstoffzelle 100 ist derart ausgelegt, daß sie teilweise oder vollständig die Energieversorgung für die Lichtbogenschweißvorrichtung 20 übernimmt und außerdem das während des Lichtbogenschweißens von Werkstück 30 benötigte Schutzgas liefert. Die Brennstoffzelle ist vorzugsweise derart ausgelegt, daß sie mit organischen Versorgungsmitteln (Speisung) betrieben werden kann, so daß im Ergebnis die elektrische Versorgungsenergie für die Lichtbogenschweißvorichtung erzeugt wird und ein Reaktionsprodukt entsteht, das umweltfreundlich ist. Das organische Versorgungsmittel wird derart ausgewählt, daß zumindest eines der Reaktionsprodukte auch als Schutzgasquelle während des Lichtbogenschweißbetriebs verwendet werden kann. Als Folge hiervon bietet der Einsatz einer Brennstoffzelle die Vorteile großer Mobilität, hoher Umweltverträglichkeit sowie reduzierter Luft- und Lärmbelästigung und es kann auf andere Schutzgasquellen verzichtet werden. Der Verzicht auf andere, zusätzliche Schutzgasquellen beseitigt die Kosten, die mit dem Gas sowie den Versorgungsschwierigkeften beim Beschaffen des Gases verbunden sind. Eine flüssigkeitsgespeiste Brennstoffzelle wandelt die chemische Energie des Brennstoffs unmittelbar in elektrischen Strom ohne Verbrennen des Brennstoffs um. Die Brennstoffzelle bietet zahlreiche Vorteile gegenüber konventionellen Energiequellen wie z.B., daß der Brennstoff für die Brennstoffzelle eine allgemein und weit verbreitet verwendete Substanz ist, d.h. insbesondere Methanol (eine Flüssigkeit die auch unter Methylalkohol bekannt ist),die mit Wasser vermischt ist. Methanol ist billig, auf einfache Weise aus Kohle oder natürlichem Gas herstellbar und sicher zu speichern. Ein weiterer Vorteil der Brennstoffzelle besteht darin, daß sie eine relativ niedrige Betriebstemperatur (unterhalb des Siedepunktes von Wasser) hat und relativ kompakt ist. Die niedrige Betriebstemperatur eliminiert die Notwendigkeit spezieller, hochschmelzender Materialien, voluminöser Thermoisolierungen und von Verstärkungselementen, um Sicherheitsrisikien zu minimieren. Außerdem erzeugt die Brennstoffzelle keine toxischen Nebenprodukte. Das Methanol wird vollständig in Kohlenstoffdioxyd (CO2) und Wasser umgewandelt. Die Brennstoffzelle ist einfach und relativ kostengünstig herzustellen, da sie fast ausschließlich aus einer mit Platin oder einem anderen Edelmetall beschichteten Membran besteht. Die Brennstoffzelle selbst weist keine sich bewegenden Teile auf. Die Edelmetalle werden nur in kleinen Mengen benötigt und können am Ende des Lebenszyklus der Vorrichtung wiedergewonnen und recycelt werden. Ohne sich bewegende Teile ist die Brennstoffzelle im Betrieb absolut ruhig. Außerdem wandelt die Brennstoffzelle mehr als 34% des theoretischen Energiegehalts des Brennstoffs in verwertbare Energie um. Die Effizienz ist mithin doppelt so hoch wie bei vorhandenen Benzinaggregaten.

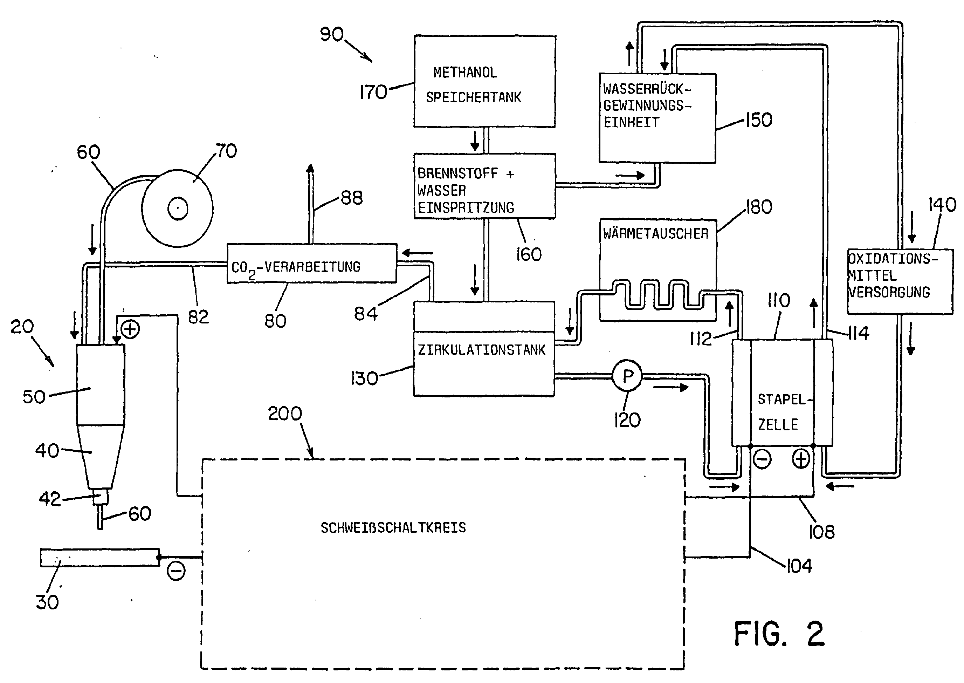

Der Betrieb der elektrischen Energiequelle 90 wird nun unter Bezugnahme auf Fig. 2 näher erläutert. Die elektrische Energiequelle 90 ist hier als Zellenstapel (stack) 110 aus Einzelzellen 100 gezeigt. Jede der nicht gezeigten Einzelzellen weist eine Anode, eine Kathode und eine Polymermembran mit einer festen, protonenleitenden und kationenaustauschenden Polymermembran als Elektrolyt auf. Die Anode, Kathode und der Feststoff-Polymermembran-Elektrolyt sind vorzugsweise jeweils als einzelne Mehrschichtenstrukturen ausgeführt und werden nachfolgend als Membran-Elektrolytenanordnung bezeichnet werden. Eine detaillierte Beschreibung jeder Brennstoffzelle 100 ist im Patent US 5,599,638 offenbart, dessen Inhalt durch Nennung ausdrücklich zum Offenbarungsgehalt dieser Anmeldung gemacht wird. Zum Pumpen der organischen Brennstoffwasserlösung in eine Anodenkammer der Brennstoffzelle hinein ist eine Pumpe 120 vorgesehen. Die organische Brennstoffwassermischung wird durch eine Ausgangsöffnung 112 im Zellenstapel 110 abgezogen und rezirkuliert durch einen Kreislauftank 130 hindurch. Das in der Anodenkammer der Brennstoffzelle gebildete Kohlendioxyd entgast durch Öffnung 114. Eine Oxidationsmittelversorgung 140 ist vorgesehen, um die Kathodenkammer der Brennstoffzelle mit Sauerstoff und/oder Luft zu speisen. Bei der Oxidationsmittelversorgung 140 zum Speisen mit Sauerstoff und/oder Luft kann es sich beispielsweise um eine Sauerstofflasche, einen Luftventilator und/oder einen Luftkompressor handeln. Eine Luft-Wasser und/oder Sauerstoff-Wasser-Mischung wird aus dem Zellenstapel 110 über die Ausgangsöffnung 114 abgezogen und einer Wasserrückgewinnungseinheit 150 zugeführt. Die Wasserrückgewinnungseinheit 150 trennt Luft und/oder Sauerstoff aus dem Wasser ab. Ein Teil des in der Einheit 150 abgetrennten Sauerstoffs und/oder der Luft wird der Oxidationsmittelversorgung 150 zum Wiedereintritt in die Stapelzelle bzw. den Zellenstapel 110 zugeführt. Dabei wird dem zugeführten Sauerstoff bzw. der Luft von der Oxidationsmittelversorgung 140 frische Luft bzw. frischer Sauerstoff zugefügt. Mit dem von der Einheit 150 abgetrennten Wasser wird eine Brennstoff- und Wassereinspritzeinheit 160 gespeist, die außerdem aus einem Speichertank 170 einen organischen Brennstoff, wie insbesondere Methanol erhält. Einspritzeinheit 160 verbindet das Wasser aus der Rückgewinnungseinheit 150 mit dem organischen Brennstoff aus Tank 170, wodurch eine Brennstoffwasserlösung, bestehend aus in Wasser gelöstem Brennstoff, generiert wird.

Die mit der Einspritzeinheit 160 geschaffene Brennstoffwasserlösung wird einem Kreislauftank 130 zugeführt. Ferner wird ein Kohlendioxyd enthaltendes Brennstoffwassergemisch durch Öffnung 112 aus dem Zellenstapel 110 abgezogen, einem Wärmetauscher 180 zugeführt und anschließend in den Kreislauftank 130 eingespeist. Der Kreislauftank 130 erhält folglich sowohl eine Brennstoffwasserlösung aus der Einspritzeinheit 160 als auch eine Kohlendioxyd enthaltende Brennstoffwasserlösung vom Wärmetauscher 180. Der Kreislauftank 130 scheidet Kohlendioxyd aus der Brennstoffwassermischung aus und gibt das Kohlendioxyd über die Ableitung 84 frei. Die derart erhaltene Brennstoffwasserlösung wird über Pumpe 120 in den Zellenstapel 110 eingespeist. Der Kreislauftank 130 könnte auch zwischen dem Zellenstapel 110 und dem Wärmetauscher 180 angeordnet werden, so daß das Kohlendioxyd bereits vor dem Wärmetauscher abgeschieden wird, wodurch der Wirkungsgrad des Wärmetauschers verbessert wird. Ein nicht dargestelltes Heizaggregat könnte eingesetzt werden, um das Methanol-Wassergemisch vor dem Einspeisen des Gemischs in den Brennstoffzellenstapel aufzuheizen. Ferner könnte auch ein nicht dargestellter Vorwärmer eingesetzt werden, um das Methanol-Wassergemisch aufzuheizen, bevor das Gemisch zum Zellenstapel fließt. Ferner könnte ein nicht dargestellter Methanolsensor eingesetzt werden, um die Methanolkonzentration abzutasten, um die gewünschte Konzentration im Gemisch aufrechthalten zu können. Ein nicht dargestellter Sauerstoffsensor könnte verwendet werden, um die Sauerstoffkonzentration messen und die benötigte Konzentration in der Brennstoffzelle aufrechthalten zu können.

Die Arbeitsweise der verschiedenen in Fig. 2 dargestellten Komponenten wird nun näher erläutert. Kreislauftank 130 ist vorzugsweise ein Turm, der einen großen Luftraum aufweist. Das von der Einspritzeinheit 160 erhaltene Brennstoffwassergemisch wird in einem oberen Abschnitt des Turms zugeführt. Das mit Kohlendioxyd versehen Brennstoffwassergemisch wird in einen unteren Abschnitt des Turms eingespeist. Hierdurch kann sich das aus dem Brennstoffwassergemisch abgeschiedene Kohlendioxydgas im Luftraum sammeln und letztenendes über ein Ventil 28 einer CO₂₋Verarbeitungseinheit 80 abgeführt und/oder direkt über Leitung 82 dem Lichtbogenschweißbrenner 20 zugeführt werden. Die CO₂₋Verarbeitungseinheit 80 kann einen Gasreiniger, einen Kompressor, einen Trockner und/oder einen Kondensator (nicht gezeigt) umfassen, um das aus dem Kreislauftank 130 stammende CO₂-Gas zu reinigen und/oder zu komprimieren. Alternativ kann das Kohlendioxyd enthaltende Brennstoffwassergemisch durch ein Röhrenbündel aus mikroporösem Material hinddurchgeführt werden, das ein Freisetzen des Gases durch die mikroporösen Röhrenwände ermöglicht, während der flüssige Brennstoff entlang der Röhren fließt.

Ein nicht gezeigtes statisches Rezirkulationssystem könnte innerhalb einer Anodenkammer des Zellenstapels 110 eingesetzt werden, um Kohlendioxyd aus dem Brennstoffwassergemisch zu separieren, so daß ein externer Kreislauftank nicht benötigt würde. Bei einem derartigen System würden die Kohlendioxydbläschen aufgrund der ihnen eigenen Auftriebsenergie anstreben, innerhalb der Anodenkammer vertikal aufzusteigen. Viskose Wechselwirkungen mit dem die Glasbläschen umschließenden flüssigen Brennstoffgemisch schleppen dann den flüssigen Brennstoff nach oben in Richtung auf die Ausgangsöffnung 114 zu. Sobald die Flüssigkeit außerhalb der Anodenkammer ist, gibt sie das Gas frei, tauscht Wärme mit der Umgebung und kühlt ab, wodurch ihre Dichte höher wird als diejenige der Flüssigkeit in der Brennstoffzelle. Die blasenfreie bzw. dichtere Flüssigkeit wird dem Boden der Anodenkammer über eine Einlaßöffnung zugespeist. Anstatt elektrische Energie an der Pumpe zu verbrauchen, nutzt mithin das statische Rezirkulationssystem die in der Brennstoffzelle erzeugte Wärme bzw. das erzeugte Gas. Die vorgenannte Betriebsweise bildet die Basis für das statische Rezirkulationssystem.

Bevor die Brennstoffzelle als Energiequelle für die Lichtbogenschweißvorrichtung eingesetzt wird, wird die Anodenkammer des Brennstoffzellenstapels mit dem Gemisch aus organischem Brennstoff und Wasser gefüllt und die Kathodenkammern wird mit Luft oder Sauerstoff gefüllt. Während des Betriebs zirkuliert der organische Brennstoff an den Anoden vorbei, während Sauerstoff bzw. Luft zu den Kathoden hinfließt. Wenn ein elektrischer Schaltkreis 200 zwischen Anode und Kathode des Zellenstapels geschaltet ist, tritt eine Oxidation des organischen Brennstoffs an der Anode und eine Reduktion des Sauerstoffs an der Kathode auf. Die unterschiedlichen Reaktionen an Anode und Kathode steigern die Spannungsdifferenz zwischen den beiden Elektroden. Die an der Anode durch Oxidation erzeugten Elektronen werden durch die Schweißschaltkreis 200 geleitet und letztendlich an der Kathode eingefangen. An der Anode erzeugte Wasserstoffionen oder - protonen werden direkt über die Membran zur Kathode geführt. Ein Stromfluß wird durch einen Fluß von Ionen durch die Membran und Elektronen durch den Schweißschaltkreis aufrechterhalten.

Der Aufbau von Anode, Kathode und Membran in der Brennstoffzelle werden nun kurz beschrieben. Die Anode, Kathode und Membran bilden eine Verbundschicht. In bevorzugter Ausgestaltung wird die Membran aus einem perfluoriniertem Protonenaustauschmaterial (PEM) gebildet, wie beispielsweise einem Copolymer aus Tetraflourethylen und Perflourvinylether-Sulfonsäure. Auch andere Membranmaterialien können eingesetzt werden. Beispielsweise könnten Membranen aus modifizierten perfluourinierten Sulfonsäurepolymeren, mehrwertigen Kohlenwasserstoff-Sulfonsäuren oder Mischungen dieser oder mehrerer derartiger Protonenaustauschmembranen (PEM) eingesetzt werden. Die Membran minimiert den Brennstoffübergang während des Betriebs der Brennstoffzelle und ermöglicht, daß Protonen durch die Membrane hindurchtreten können.

Die Anode wird aus Platin-Rutheniumlegierungspartikeln gebildet, die sowohl feiner Metallstaub, d.h. "selbsttragend", als auch auf Karbon-Hartmantelflächen dispergiert, d.h. "unterstützt", sein können. Eine Karbonfaser-Unterschicht kann verwendet werden, um den elektrischen Kontakt mit den Partikeln des Elektrokatalysatoren herzustellen. Alternativ könnten sowohl freitragende als auch unterstützte Elektrokatalysatoren auf chemischem Wege mit einem Fluorpolyamidbinder verbunden und auf Karbonpapier aufgestrichen oder aufgedruckt vorbehandelt werden, um die Anode zu erzeugen. Anstelle von Platin-Ruthenium könnten Legierungen auf Platinbasis eingesetzt werden, in denen das zweite Metall entweder Zinn, Iridium, Osmium oder Remium ist. Im allgemeinen hängt die Wahl der Legierung von dem in der Brennstoffzelle verwendeten Brennstoff ab. Platin-Ruthenium ist vorteilhaft bei der Elektrooxidation von Methanol. Bei Platin-Ruthenium ist die Beladung der Legierungspartikel in der Elektrokatalysatorenschicht vorzugsweise im Bereich von etwa 0,05-4,0 mg/cm². Bei höheren Beladungsniveaus wird eine effizientere Elektrooxidation erzielt als bei niedrigeren Beladungsniveaus. Das Anodengefüge für die flüssigkeitsgespeiste Brennstoffzelle erfordert einen Gefüge, das ähnlich zu dem von Batterien ist. Das Anodengefüge ist porös und in der Lage, den flüssigen Brennstoff zu benetzen. Außerdem muß das Anodengefüge sowohl elektronische als auch ionische Leitfähigkeit aufweisen, um die Elektronen effizient zum Anodenstromsammler (Carbonpapier) und Wasserstoff-Hydronium-Ionen zur Elektrolytenmembran zu transportieren. Außerdem sollte das Anodengefüge das Erreichen der günstigen Gasfreisetzungscharakteristiken an der Anode unterstützen.

Die Elektrokatalysatorenschicht und Kohlenstofffaser-Unterlage der Anode werden vorzugsweise mit hydrophilem, protonenleitendem Polymerzusatz imprägniert. Der Zusatz in der Anode ist teilweise vorgesehen, um einen effizienten Transport der bei der Oxidationsreaktion erzeugten Protonen und Hydronium-Ionen zu ermöglichen. Der ionomerische Zusatz unterstützt auch ein gleichmäßiges Benetzen der Elektrodenporen mit dem flüssigen Brennstoffwassergemisch und sorgt für eine bessere Ausnutzung des Elektrokatalysatoren. Die Kinetik der Elektrooxidation von Methanol wird bei reduzierter Anionenabsorption ebenfalls verbessert. Außerdem unterstützt der Einsatz eines ionomerischen Zusatzes in vorteilhafter Weise die Gasfreisetzungscharakteristiken der Anode. Der Zusatz sollte hydrophil, protonenleitend sowie elektrochemisch stabil sein und die Kinetik der Oxidation des flüssigen Brennstoffs nicht behindern. Die einsetzbaren hydrophilen, protonleitenden Zusätze können ein Copolymer aus Fluorkohlenstoffpolymer oder Fluorkohlenstoff-Sulfonsäurepolymer, quellfähigem Ton (Montmorillonit), Zeolith, Alkoxydzellulose, Zyklodextrin und/oder Zirkonium-Wasserstoffphosphate sein. Eine Beladung von 0,05-0,5 mg/cm² wird bevorzugt. Elektrodenzusammensetzungen mit Zusätzen größer als 10% können zu einem Anwachsen des Innenwiderstandes der Brennstoffzelle und zu einer schlechten Bindung mit dem Feststoff-Polymermembran-Elektrolyten führen. Zusammensetzungen mit weniger als 2% Zusätzen führen in der Regel nicht zu einer verbesserten Elektrodenperformance.

Die Kathode ist eine Gasdiffusionselektrode, bei der auf einer Seite der Membran Platinpartikel aufgebondet sind. Die Kathode wird vorzugsweise aus freiem oder unterstütztem Platin gebildet, das auf der der Anode gegenüberliegenden Seite der Membran aufgebracht ist. Wie bei der Anode haften die Kathodenmetallpartikel vorzugsweise auf einer Kohlenstoffunterlage. Die Beladung mit elektrokatalytischen Teilchen auf der Kohlenstoffunterlage liegt vorzugsweise im Bereich von etwa 0,5-4,0 mg/cm². Die Elektrokatalysatorlegierung und die Kohlenstofffaserunterlage enthalten vorzugsweise ein Fluoridpolymer, um die zum Erzeugen einer Dreiphasengrenze benötigte Hydrophobie zu schaffen und eine effiziente Abführung des bei der Sauerstoffreduktion erzeugten Wassers zu erzielen.

Während des Betriebs zirkuliert ein Brennstoffwassergemisch (das vorzugsweise weder acidische noch alkalische Elektrolyte enthält) mit einer Konzentration von etwa 0,5-3,0 Mol/l an der Anode vorbei. Vorzugsweise liegen die Durchflußraten bei etwa 10-500 mL/min. Wenn das Brennstoffwassergemisch durch die Anode hindurchgeht, tritt bei einer Methanolzelle folgende, elektronenfreigebende chemische Reaktion auf:

Anode: CH³ OH + H₂O → CO₂ + 6H⁺ + 6e⁻ (1)

Das bei obiger Reaktion erzeugte Kohlendioxyd wird mit der Brennstoffwasserlösung durch den Ausgang 114 abgezogen und von der Lösung in einem Gas-Flüssigkeitstrenner 150 abgespalten. Die Brennstoffwasserlösung wird anschließend mittels der Pumpe 120 in die Brennstoffzelle zurückgeführt. Gleichzeitig mit der elektrochemischen Reaktion an der Anode findet an der Kathode als weitere elektrochemische Reaktion die Elektroreduktion des Sauerstoffs statt, durch die Elektronen zurückgehalten werden.

Kathode: O₂ + 4H⁺ + 4e⁻ → H₂O (2)

Die einzelnen in den Formeln (1) und (2) beschriebenen Elektrodenreaktionen ergeben beispielhaft bei einer Methanol-Brennstoffzelle folgende Gesamtreaktion:

Brennstoffzelle: 2CH₃OH + 3O₂→ 2CO₂ + 4H₂O

Bei ausreichend hohen Brennstoffkonzentrationen können Stromdichten größer als 500 mA/cm entstehen. Niedrigere Durchflußraten des Methanolzufluß zeigen Vorzüge bei niedrigen Stromdichten. Hohe Druchflußraten des Methanolzufluß sind günstig, um während des Betriebs mit hohen Stromdichten den Massentransport des organischen Brennstoffs zur Anode zu steigern und das bei der elektrochemischen Reaktion erzeugte Kohlendioxyd abzuführen.

Luft oder Sauerstoff zirkulieren hinter der Kathode vorzugsweise bei Drücken im Bereich von 0-2,07 bar (0-30 PSIG). Höhere Drücke als Umgebungsdruck können den Massentransport von Sauerstoff zum Ort der chemischen Reaktion insbesondere bei hohen Stromdichten verbessern. Das bei der elektrochemischen Reaktion an der Kathode abfallende Wasser wird mittels Sauerstoffluß durch Ausgang 114 von der Kathode wegtransportiert.

Die Dicke der protonleitenden Feststoff-Polymermembran (PEM) sollte im Bereich von 0,05-0,5 mm liegen, um größenstabil zu sein. Membranen, die dünner als 0,05 mm sind, können zu Membranelektrodenanordnungen mit schlechten mechanischen Eigenschaften führen, während Membranen, die dicker als 0,5 mm sind, extreme und schädliche Größenschwankungen aufgrund von Quellen des Polymers durch die flüssige Brennstoffwasserlösung erleiden können und außerdem übermäßigen Widerstand zeigen. Die Ionenleitfähigkeit der Membranen sollte größer als 1 Ohm⁻¹ cm⁻¹ sein, damit die Brennstoffzelle einen mäßigen Innenwiderstand hat. Wie bereits erwähnt sollte die Membran eine geringe Durchlässigkeit für den flüssigen Brennstoff zeigen. Membranen aus Polyethylen und Polypropylensulfonsäure, Polystyrol-Sulfonsäure und anderen mehrwertigen kohlenwasserstoffhaltigen Sulfonsäuren können abhängig von der Temperatur und Dauer des Brennstoffzellenbetriebs verwendet werden. Zusammengesetzte Membranen, bestehend aus zwei oder mehr Typen protonleitender, Kationen austauschender Polymeren mit unterschiedlichen Säuregehalten oder verschiedenartigen chemischen Zusammensetzungen (wie beispielsweise modifizierten Säure- oder Polymergrundgefügen), oder verschiedenen Wassergehalten oder unterschiedlichen Arten und Ausmaßen von Zwischenverbindungen (wie beispielsweise Querverbindungen zwischen mehrwertigen Kationen, z.B. AL3+, MG2+ etc.) können eingesetzt werden, um niedrige Brennstoffdurchlässigkeit zu erzielen. Derartige zusammengesetzte Membrane können hergestellt werden, um hohe Ionenleitfähigkeit, niedrige Permiabilität für den flüssigen Brennstoff und gute elektrochemische Stabilität zu erreichen.

Aus der vorhergehenden Beschreibung ist ersichtlich, daß durch Verwenden einer protonleitenden, festen Polymermembran als Elektrolyt eine organische Brennstoffzelle ohne freilösliche saure oder basische Elektrolyte erhalten wird. Das einzige bzw. ausschließliche Elektrolyt ist die protonleitende Polymermembran (PEM). Da keine freien Säuren vorhanden sind, werden säurebedingte Korrosionen der Zellenbauteile, die bei den gängigen säurebasierten organische/Luftbrennstoffzellen auftreten können, vermieden. Dies gewährt beträchtliche Flexibilität bei der Wahl der Materialien für die Brennstoffzelle und die mit ihr verbundenen Untersysteme. Außerdem verschlechtert sich die Zelleneffizienz, im Gegensatz zu Brennstoffzellen, die Kaliumhydroxyt als flüssigen Elektrolyten enthalten, hier nicht, da keine löslichen Carbonate gebildet werden. Durch den Einsatz einer festen Elektrolytmembran können außerdem parasitäre Nebenschlußströme vermieden werden.

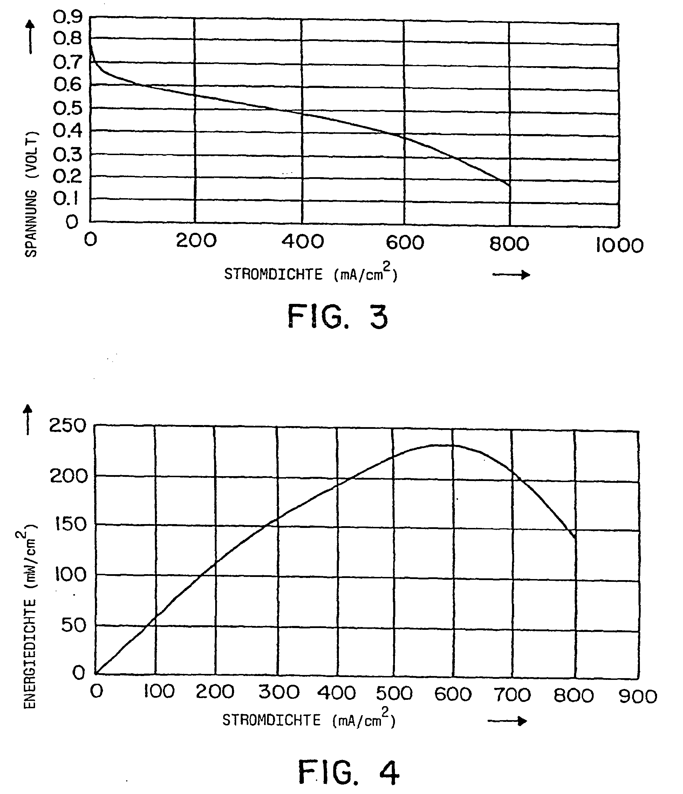

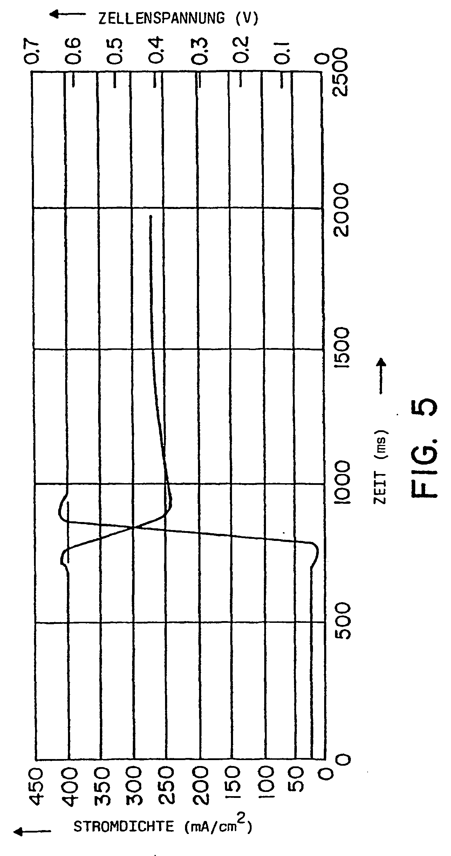

Fig. 3 verdeutlicht die Brennstoffzelleneffizienz durch die Funktionskurve von Brennstoffzellenleistung über Stromdichte (in mA/cm²). Fig. 3 zeigt den Nutzeffekt bei einer Brennstoffzelle, die mit einmaliger Methanollösung bei 90° und einem Luftmischungsdruck von 1,37 bar (20 PSIG) gespeist wird. Der Kurvenverlauf zeigt, daß mittels der Brennstoffzelle etwa 0,48 Volt bei annähernd 400 mA/cm² aufrechterhalten werden können. Die Optimierung der Brennstoffzelle bedingt einen Abgleich zwischen Stromdichte und Zelleneffizienz. Fig. 4 zeigt die Leistungsdichte in Abhängigkeit von der Stromdichte. Der optimale Betriebspunkt erzielt eine Leistungsdichte von ungefähr 230 mW/cm². Der optimale Betriebspunkt tritt bei Stromdichten zwischen 400 und 700 mA/cm² auf. Die Zellenspannung innerhalb dieses Bereichs liegt zwischen 0,48 und 0,31 Volt. Fig. 5 zeigt das Einschwingverhalten bzw. die Übergangsfunktion der Brennstoffzelle. Die Einschwingzeit der Brennstoffzelle liegt bei etwa 500-800 ms. Diese kurze Einschwingzeit ist für den Einsatz bei Lichtbogenschweißbrennern geeignet, so daß größere Energiespeicherelemente nicht benötigt werden.

Ein anerkannt guter Schweißlastverlauf wird durch die Gleichung V=15 + 0.05I wiedergegeben. Wenn die Spannung einer einzelnen Zelle etwa 0,44 Volt beträgt, müssen mehrere einzelne Brennstoffzellen in Serie geschaltet werden, um eine ausreichende Spannung zum Schweißen zu erhalten. Aufgrund der Verluste im Energieumwandlungsschaltkreis und in den Kabeln und aufgrund der Ausgleichsvorgängen bei der Schweißlast ist ein Sicherheitsspielraum von wenigen Volt vorgesehen. Der Sicherheitsspielraum basiert auf Erfahrungswerten unter typischen Schweißbedindungen und hängt mehr oder weniger von den aktuellen Begleitumständen ab. Die Querschnittsfläche der Brennstoffzelle wird über den gewünschten Laststrom und die Betriebsstromdichte der Zelle bestimmt.

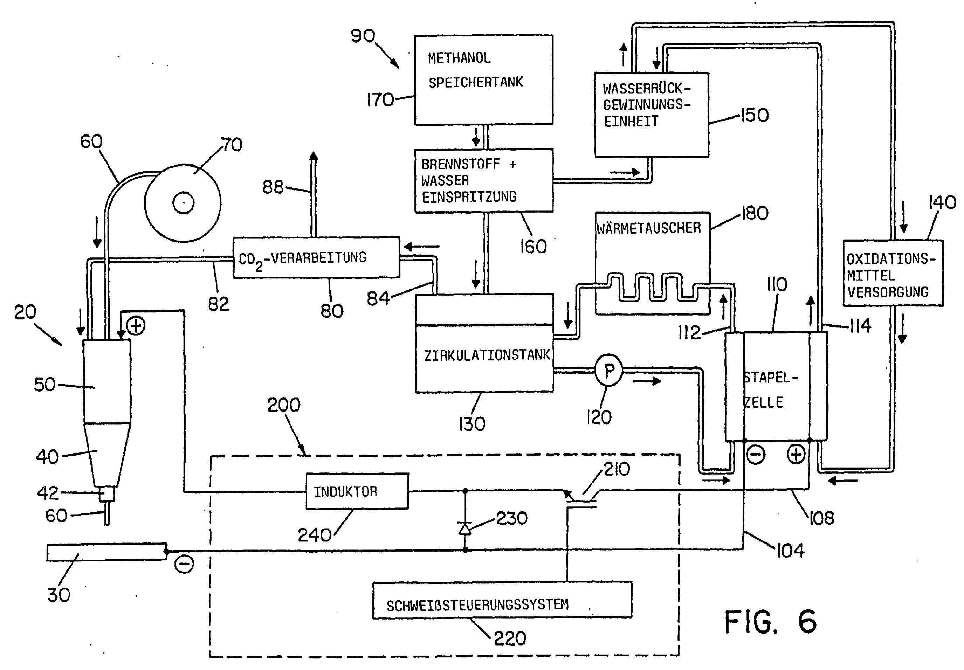

Fig. 6 zeigt einen Schweißstromkreis, der einen Leistungs-Kompensationskonverter (buck power converter) aufweist. Die nachfolgende Tabelle zeigt die zugehörigen Daten für Zellenstapelkonfigurationen, wenn ein Kompensationskonverter bei üblichen Schweißladungen und Betriebsbedingungen verwendet wird. Um die Zellenstapelkonfiguration der Brennstoffzelle zu kalkulieren, wurden folgende Betriebsbedingungen für die Brennstoffzelle angenommen: 220 mW/cm² und 500 mA/cm² (0,44 Volt).

**Zellenstapelkonfiguration--Leistungs-Kompensationskonverterstufe**

| Schweißstrom | Schweiß spannung | Lastleistung | Spannungsreserve | Gesamtspannung | Zellenanzahl im Zellenstapel | Zellenquerschnittsfläche (cm²) |
|---|---|---|---|---|---|---|
| 0 | 15.0 | 0.0 | 13 | 28 | 63 | 0 |
| 100 | 20.0 | 2.0 | 14 | 34 | 77 | 113 |
| 150 | 22.5 | 3.4 | 14.5 | 37 | 84 | 175 |
| 300 | 30.0 | 9.0 | 16 | 46 | 104 | 376 |
| 400 | 35.0 | 14.0 | 17 | 52 | 118 | 516 |
| 500 | 40.0 | 20.0 | 18 | 58 | 131 | 664 |

Die Pluspole des Zellenstapels 110 sind auf der Seite angeordnet, an der das Oxidationsmittel zugeführt wird, und sind mit dem Eingang des Leistungsumformerschaltkreises 200 verbunden. Der Minusanschluß ist auf der Seite, an der Brennstoff zugeführt wird, und ist mit einer Klemme am Werkstück 30 verbunden. Schweißschaltkreis 200 wird zum Regulieren des Schweißstroms in Antwort auf ein Rückkopplungssignal proportional zur Schweißspannung, Schweißstrom oder beiden geregelt. Ein Umkehren der Anschlüsse von Schweißelektrode und Werkstück würden den Schweißlaststrom umkehren. Für CO₂-Schweißprozesse wird häufig ein Aufbau mit Gleichstrom und Minuselektrode erwünscht.

In Fig. 6 ist das Sammeln von CO₂ an zweckmäßiger Stelle im Brennstoffzellensystemschaubild gezeigt. Der Zellenstapel 110 erzeugt eine Übermenge an CO₂ zum Schweißen. Das CO₂ kann Spurenelemente von Wasser- oder Methanoldampf enthalten, die vor dem Einspeisen des Gases in den Lichtbogenschweißbrenner entfernt werden müssen. Um sicherzustellen, daß das Gas frei von Dampfverunreinigungen ist, kann ein Gastrockner eingesetzt werden. In der Regel wird die Brennstoffzelle bei Drücken betrieben, die Umgebungsdruck übersteigen, so daß eine Kompression des CO₂ im allgemeinen nicht notwendig ist. Falls der Betriebsdruck der Brennstoffzelle jedoch zu niedrig ist, kann das CO₂-Gas komrimiert werden, bevor es dem Schweißlichtbogen zugeleitet wird. Die Durchflußrate des Schweißschutzgases muß auf ein geeignetes Niveau reguliert werden, um übermäßige Lichtbogenstörungen zu vermeiden. Da die Brennstoffzelle mehr CO₂ als für den Schutz des Lichtbogens benötigt wird, produziert, kann ein Durchflußregulierer vorgesehen werden, so daß nur eine geeignete Schutzgasmenge fließt. Der verbleibende Rest des CO₂ wird abgesaugt oder zu anderen Zwecken verwendet.

Fig. 6 zeigt den elektrischen Anschluß bei einer Konfiguration mit Gleichstrom und positiver Elektrode. Ein Leistungsumwandlerschaltkreis wird verwendet, um den Ausgangsstrom der Brennstoffzelle auf die Schweißlast abzustimmen. Fig. 6 zeigt für diesen Zweck einen Kompensationsumformer (chopper). Der Schweißschaltkreis 200 weist einen Transistor 210 auf, der mittels eines Schweißsteuerungssystems 220 gesteuert wird. Das Schweißsteuerungssystem steuert die Wellenform des der Schweißvorrichtung zugeführten Stroms. Das Schweißsteuerungssystem kann sich auf eine Rückkopplungsüberwachung während des Betriebs des Lichtbogenschweißbrenners stützen. Der Schweißschaltkreis weist ferner eine Diode 230 auf, um einen geeigneten Stromfluß durch die Elektrode hindurch aufrechtzuhalten. Ferner weist der Schweißschaltkreis einen Induktor auf, um die durch die Elektrode fließende Schweißstromwellenform zu glätten. Die Zellenstapelleistung sollte immer die Ausgleichslastanforderungen übersteigen, damit der Kompensationskonverter effektiv arbeitet.

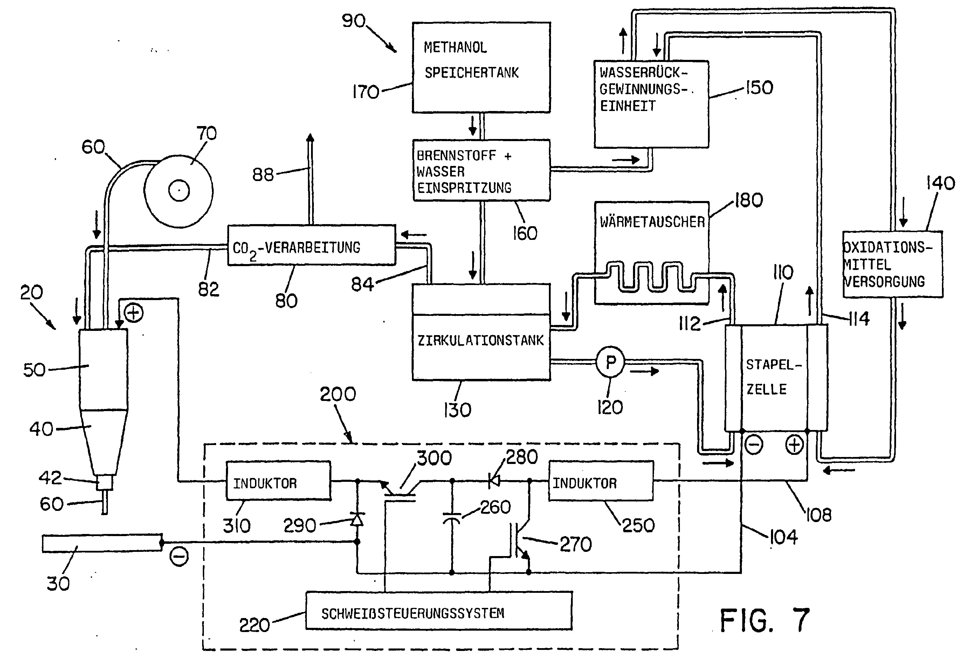

Auch andere Gleichstrom- zu Gleichstromkonverter-Schaltungen können verwendet werden. Fig. 7 zeigt die Topologie eines Zusatzspannungs-Kompensationskonverters. Die Zusatzspannungs-Kompensationsschaltung im Schweißschaltkreis 200 ist derart aufgebaut, daß die Spannung an der Elektrode gesteigert wird, ohne daß die Anzahl der Brennstoffzellen im Zellenstapel 110 erhöht werden muß. Schweißschaltkreis 200 weist ein Schweißsteuerungssystem 220 auf, das ähnlich zu dem Steuerungssystem aus Fig. 6 ist. Der Schweißschaltkreis weist ferner einen Induktor 250, einen Kondensator 260 und einen Transistor 270 auf, der mittels des Schweißsteuerungssystems 220 gesteuert wird, um die Spannung durch den Schweißschaltkreis zu verstärken. Die Funktion der Dioden 280, 290, von Transistor 300 und Induktor 310, die ähnlich wie der Zerhacker bzw. Kompensationsschaltkreis in Fig. 6 arbeiten, ist nützlich, um die Anzahl der Zellen im Zellenstapel zu reduzieren, da diese Topologie die Lastleistung auf Niveaus über oder unterhalb der Brennstoffzellenspannung regulieren kann. Diese Merkmale schaffen einen größeren Konstruktionsspielraum für den Zellenstapel, wie in der nachfolgenden Tabelle gezeigt:

**Zellenstapelkonfiguration - Kompensationsleistungskonverterstufe**

| | | | | | | | | | | |
|---|---|---|---|---|---|---|---|---|---|---|
| Zellenanzahl im Stack = | | | | 35 | | 45 | 60 | 75 | 100 | 125 |
| Zellenstapelspannung = | | | | 15,4 | | 19,8 | 26,4 | 33,0 | 44,0 | 55,0 |

| Schweiß strom (A) | Schweiß spannung (V) | Lastleistung (KW) | Zellenquerschnitts fläche (cm²) | | Zellenquerschnitts fläche (cm²) | | Zellenquerschnitts fläche (cm²) | Zellenquerschnitts fläche (cm²) | Zellenquerschnitts fläche (cm²) | Zellenquer schnitt-fläche (cm²) |
|---|---|---|---|---|---|---|---|---|---|---|
| 0 | 15.0 | 0.0 | 0 | | 0 | | 0 | 0 | 0 | 0 |
| 100 | 20.0 | 2.0 | 248 | | 193 | | 145 | 116 | 87 | 70 |
| 150 | 22.5 | 3.4 | 419 | | 326 | | 245 | 196 | 147 | 117 |
| 200 | 25.0 | 5.0 | 621 | | 483 | | 362 | 290 | 217 | 174 |
| 300 | 30.0 | 9.0 | 1118 | | 870 | | 652 | 522 | 391 | 313 |
| 400 | 35.0 | 14.0 | 1739 | | 1353 | | 1014 | 812 | 609 | 487 |
| 500 | 40.0 | 20.0 | 2484 | | 1932 | | 1449 | 1159 | 870 | 696 |

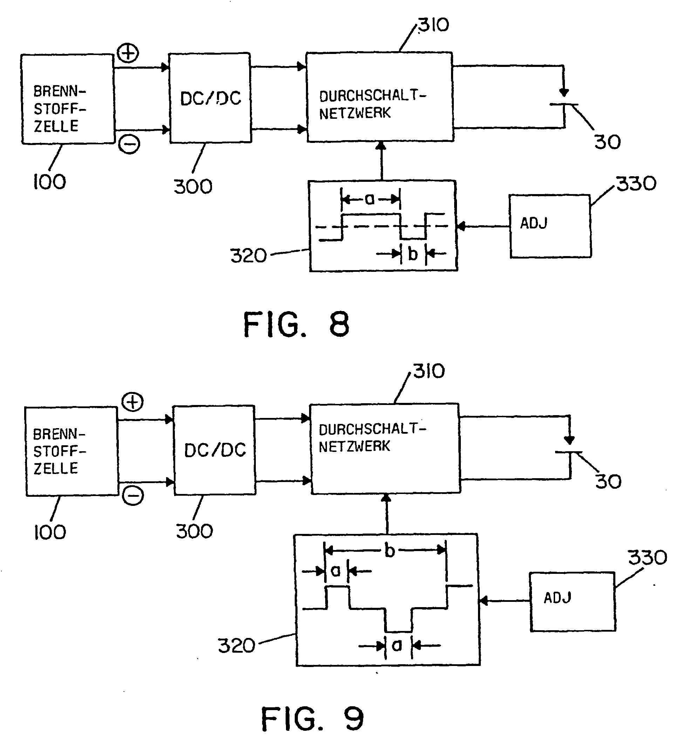

Die Fig. 8 und 9 zeigen schematisch Steuerschaltkreise für TIG-Schweißbrenner. Beim Schweißen von Aluminium und ähnlichen Metallen wird TIG-Schweißen eingesetzt, wobei eine nicht abschmelzende Elektrode wie beispielsweise eine Wolframelektrode in ausreichendem Abstand vom Werkstück gehalten wird, um einen Lichtbogen zu erhalten, wenn aufgrund einer über den Spalt angelegten Spannung ein Strom fließt. Da Aluminium sehr schnell oxidiert, ist es notwendig, die Aluminiumoxyde von der Schweißoberfläche zu entfernen, während die Lichtbogenhitze Fülldraht abgeschmilzt und auf dem Aluminiumwerkstück ablagert. Das Metall wird durch Anlegen einer Wechselstromleistungsversorgung zum Richten eines Wechselstroms durch den Spalt bzw. Zwischenraum zwischen Elektrode und Werkstück gesäubert. Während eines Positivzyklus ist die Elektrode bezüglich des Werkstücks positiv; folglich werden vom Werkstück Elektronen ausgesandt. Dieser Vorgang löst und entfernt Aluminiumoxyde von der Oberfläche als Vorbereitung für den unmittelbar nachfolgenden Negativzyklus, wobei das Wolfram oder andere nicht abschmelzende Elektronen negativ relativ zum Werkstück sind. Elektronen werden von der Wolframelektrode in Richtung zum Werkstück emittiert, um vergleichsweise effektiv im Lichtbogenbereich aufgeheizt zu werden. Durch Verwenden von Wechselstrom über dem Lichtbogen werden Hauptreinigungszyklen und Erwärmungszyklen erzeugt, so daß ein ziemlich effizientes TIG-Schweißverfahren für Aluminium geschaffen wird.

Wenn Gleichstromleistungsquellen beim TIG-Schweißen verwendet werden, muß der Schweißer einzusetzende Polarität auswählen. Falls unlegierter oder rostfreier Stahl geschweißt werden soll, muß dieser nicht gesäubert werden, so daß Gleichstrom-TIG-Schweißen mit Negativelektrode eingesetzt werden kann. Diese Polarität sorgt für keine eine Oxidschicht entfernende Lichtbogenreinigungswirkung; falls dieses System zum Aluminiumschweißen verwendet wird, muß als Schweißvorarbeit eine Reinigung und Entfernung der Oxydschicht an der Schweißoberfläche durchgeführt werden. Dies ist allerdings nur zweckmäßig, wenn schwere Aluminiumplatten TIG-geschweißt werden und die zusätzlichen Vorreinigungsarbeiten durch die erhöhte Schweißgeschwindigkeit bei Verwenden der Elektrode mit negativer Polarität ausgeglichen werden. Aufgrund dieses Umstandes wählt der Schweißer häufig TIG-Schweißen mit Gleichstrom und positiver Elektrode, wobei dann Strom von der Elektrode zum Werkstück fließt. Dies bewirkt in Kombination mit dem Lichtbogenschweißvorgang eine Reinigungswirkung.

Die Fig. 8 und 9 illustrieren eine Gleichstrom-Brennstoffzelle 100, die elektrischen Strom an einen Gleichstrom/Gleichstrom-Schaltkreis 300 liefert. Der DC/DC-Schaltkreis ist gewöhnlich eine Kompensation- oder Zusatzleistungs-Kompensationsschaltung. Andere Arten von DC/DC-Schaltkreisen können jedoch eingesetzt werden. Der modifizierte Gleichstrom wird anschließend einem Durchschaltnetzwerk 310 zugeführt. Das Durchschaltnetzwerk 310 wandelt den Gleichstrom in Wechselstrom zur Verwendung in einem TIG-Schweißvorrichtung um. Ein Wellenprofil 320 kontrolliert das Schalten im Durchschaltnetzwerk, um die Dauer der positiven und negativen Pulse während des Schweißzyklus zu steuern. In Fig. 8 ist gezeigt, daß die Dauer des positiven Pulses (a) länger als die Dauer des negativen Pulses (b) ist. Ein Pulsbreiteneinsteller 330 stellt die Pulsdauer von positivem und/oder negativem Puls ein. In Fig. 9 ist gezeigt, daß die Pulsdauer (a) von positivem und negativem Puls während des Schweißzyklus (b) näherungsweise gleich sind. Fig. 11 zeigt eine Polaritätsumkehrschaltung 340, die den von Brennstoffzelle 100 zum Lichtbogenschweißbrenner 20 fließenden Gleichstrom umkehrt. Das Umschalten der Polarität kann mittels Software gesteuert werden.

Der Schweißschaltkreis ist in der Lage, eine normale Gleichstrombrennstoffzelle zur Verwendung für eine TIG-Schweißvorrichtung in eine Wechselstromleistungsquelle zu wandeln. Der Schweißvorgang kann auch mit abschmelzenden Schweißelektroden durchgeführt werden. Die abschmelzende Elektrode wird abgeschmolzen und auf dem Werkstück mittels kugelförmiger Übertragung, Kurzschlußübertragung, Pulsstromübertragung etc. abgelegt. Für diese Metallübertragungssysteme kann es vorteilhaft sein, von einem Positivstrom auf einen Negativstrom umzuschalten, um die Abschmelzrate der Elektrode zu steigern oder andere Vorteile zu erzielen. Der Schweißschaltkreis kann zum Erzeugen einer kurzzeitigen Strompolaritätsumkehr eingesetzt werden, die beim Schweißen wie beim TIG-Schweißen Verwendung findet.

Der Schweißschaltkreis hat die Vorteile einer normalen Wechselstrom-TIG-Schweißvorrichtung mit der zusätzlichen Leistungsfähigkeit, das Ausmaß des Erhitzens und Reinigens des Werkstücks für eine kurze Periode einstellen zu können. Der Schweißschaltkreis kann das Verhältnis von Plus- zu Negativleistung regeln, um das Ausmaß der während des Positivstromflusses bewirkten Reinigung zu steuern.

Der Schweißschaltkreis kann auch zum Reduzieren von Lichtbogendurchschlag verwendet werden. Das Schweißen mit abschmelzenden Elektroden bei hohen Gleichstromniveaus bringt normalerweise Lichtbogenverwerfungen mit sich, die durch Magnetfeldwechselwirkungen mit dem Lichtbogenplasma verursacht werden. Der Schweißschaltkreis kann die Wirkung des Lichtbogendurchschlags durch kurzzeitige Umkehrung des Lichtbogenstroms reduzieren.

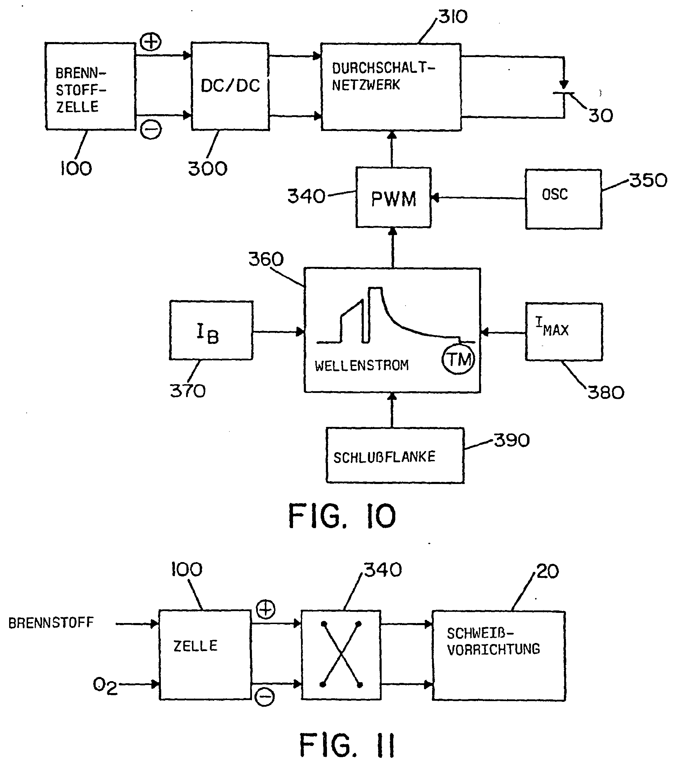

In Fig. 10 ist eine Brennstoffzelle 100 als Energieversorgung für einen STT-Schweißbrennertyp gezeigt. Der Gleichstrom der Brennstoffzelle sorgt für Strom am DC/DC-Schaltkreis 300. Die DC/DC-Schaltung kann wie bei Fig. 8 und 9 beschrieben aufgebaut sein. Der Strom vom DC/DC-Schaltkreis gelangt zum Durchschaltnetzwerk 310. Das Durchschaltnetzwerk bildet die gewünschte Wellenform für den Strom am Werkstück 30. Das Durchschaltnetzwerk wird von einem Pulsbreitenmodulator (PWM) 340 gesteuert, der mittels eines Oszillators (OSC) 350 geregelt wird. Die erwünschte Wellenform für den Strom am Werkstück 30 wird mittels dem STT-Wellenformprofil 360 gesetzt. Eine Hintergrundstromeinstelleinrichtung 370 und eine Maximalstromeinstelleinrichtung 380 werden eingesetzt, um das Wellenformprofil zu modifizieren. Ein Abklingstrom am Ende der Wellenform wird mittels einer Schlußflankeneinstelleinrichtung 390 gesteuert. Der Schweißschaltkreis kann die Polarität der Wellenform während eines einzelnen Schweißzyklus oder während verschiedener Schweißzyklen durch Verwenden des Polaritätsumkehrschaltkreises aus Fig. 11 steuern.

Der Schweißschaltkreis und die Steueranordnung für einen STT-Schweißtypen sind in den Patenten US 4,972,064; US 5,148,001 und US 5,961,836 offenbart, deren Offenbarungsgehalt durch Nennung zum Gegenstand dieser Anmeldung gemacht wird. Allgemein erzeugt der Stapel von Brennstoffzellen einen Gleichstrom, der mittels eines Modulators in einen Puls umgewandelt wird. Die Formen des Pulses werden durch Impulsformerschaltungen gesteuert, wodurch eine gewünschte Stromwellenform erzeugt wird. Der Gleichstrom wird einem eine abschmelzende Kernelektrode und ein Werkstück aufweisenden Schweißbereich zugeführt.

Im STT-Prozeß wechselt die Elektrode zwischen einem Kurzschlußzustand, wenn die Elektrode das Werkstück berührt, und einem Lichtbogenzustand, bei dem die Elektrode vom Werkstück beabstandet ist, hin und her. Während des Lichtbogenzustands wird ein elektrischer Lichtbogen zwischen dem Werkstück und der Elektrode zum Abschmelzen und Aufrechterhalten des aufgeschmolzenen Elektrodenendes erzeugt, während diese für einen nachfolgenden Kurzschlußzustand dem Werkstück zugeführt wird. Der Schweißzyklus wechselt zwischen Kurzschluß- und Plasmazustand.

Während des Plasmazustandes ist es notwendig, einen Lichtbogen zu erzeugen und zur Erzielung einer gleichmäßigen und effektiven Verschweißung jederzeit aufrechtzuerhalten. Der mehrfach pro Sekunde wiederholte Schweißzyklus muß genau kontrolliert werden, um Spritzer zu verschiedenen Zeiten des Schweißzyklus zu reduzieren. Der Pulsbreitenmodulator operiert bei hohen Frequenzen. Die Betriebsfreuqenz des Pulsbreitenmodulators liegt bei etwa 10-30 kHz, wobei die Breite des nachfolgenden Strompulses über die Spannung am Wellenformsteuerer bestimmt wird. Da die Höchstrate des Schweißzyklus im allgemeinen im Bereich von 100-400 Zyklen pro Sekunde liegt, werden zahlreiche aktualisierte Pulse während jedem Schweißzyklus erzeugt.

Der Schweißzyklus lenkt Strom zum Arbeitsbereich in Abhängigkeit vom Betrieb des Pulsbreiten-Modulatorcontrollers, bis die Funktionen dr/dt (wobei r der Elektronenwiderstand ist), di/dt oder dv/dt während des Pinchzyklus ein bevorstehendes Durchbrennen anzeigen. Sobald dieses detektiert wird, wird der mittels des Schweißschaltkreises zwischen der Elektrode und dem Werkstück verursachte Stromfluß sofort auf ein niedrigeres Niveau abgesenkt.

Die Hintergrundstromschaltung legt fortgesetzt einen Strom von 5-7 A unabhängig von der Betriebsbedingung des Schweißschaltkreises an. Im Ergebnis sichert der Hintergrundstrom, daß ein Strom von wenigstens 5-7 A jederzeit während des Schweißzyklus zwischen der Elektrode und dem Werkstück fließt, wodurch ein Auslöschen des Lichtbogens zwischen der Elektrode und dem Werkstück während jeder Phase des Schweißzyklus verhindert wird.

Bei der Elektrode 60 handelt es sich vorzugsweise um eine abschmelzende Seelenelektrode, die eine Außenmetallhülle und einen Elektrodenkern aufweist. Es versteht sich, daß alternativ die Elektrode beschichtet oder ein fester Draht sein könnte. Die metallene Elektrodenhülle ist vorzugsweise aus Kohlenstoffstahl, rostfreiem Stahl oder anderem Metall oder Metallegierung gebildet. Die Zusammensetzung der Metallhülle wird vorzugsweise derart gewählt, daß sie ähnlich zu der Metallzusammensetzung des Werkstücks ist. Der Elektrodenkern weist vorzugsweise Flußmittelzusätze und/oder Legierungen und Metalle auf. Das Flußmittel kann Bestandteile zum Erzeugen einer Schlacke über dem Schweißbad aufweisen, um das Schweißbad zu schützen, bis es aushärtet, um das Schweißbad bis zum Aushärten in Position zu halten und/oder um das Schweißmetall während der Bildung des Schweißbades abzuschirmen. Das Flußmittel kann auch Bestandteile aufweisen, die Schutzgas bilden, um das Wurzelbett vor nachteiligen Umwelteinwirkungen zu schützen. Die Legierungszusätze sind vorzugsweise im Elektrodenkern eingeschlossen. Die Legierungszusätze werden vorzugsweise derart gewählt, daß die Legierungszusätze in Abstimmung mit der Zusammensetzung der Metallelektrodenhülse ein Schweißbad ausbilden, das eine Zusammensetzung hat, die ähnlich zur Metallzusammensetzung des Werkstücks ist.

Fig. 10 zeigt ein erwünschtes Stromprofil, um geringes Spritzen während des Schweißens zu erhalten. Dieses Schweißprofil ist in einen Pinchabschnitt, einen Plasmaverstärkungsabschnitt, einen Plasmaabschnitt und einen Hintergrundabschnitt unterteilt, wobei der Lichtbogen aufrechterhalten bleibt. Der Plasmaverstärkungsabschnitt, der den kritischen Bereich beim Betrieb des Steuerungssystem gegen Spritzer bildet, ist hierbei der konstante Stromabschnitt vor dem Abklingabschnitt; der Abklingabschnitt kann jedoch auch dem Ende des Plasmaverstärkungsabschnitts oder dem Beginn des Plasmaabschnitts zugeordnet werden. Im Anschluß an den Abklingabschnitt wechselt der Stromsteuerschaltkreis auf das Hintergrundstromniveau, das das Plasma bzw. den Lichtbogen aufrechthält.

Der Stromsteuerschaltkreis hält erfindungsgemäß ein vorgewähltes Hintergrundstromniveau aufrecht, wodurch verhindert wird, daß das Stromniveau am Lichtbogen irgendwann unter das vorgewählte Niedrigstromniveau fallen könnte, bei dem der Lichtbogen erlischen würde.

Der Stromsteuerschaltkreis ist derart ausgelegt, daß er sämtliches Abschmelzen der Elektrode während des Plasmaverstärkungs- und Plasmaabschnitts des Schweißzyklus erzeugt. Ein weiteres Abschmelzen der Elektrode findet auf Hintergrundstromniveau nicht statt, da der zum Abschmelzen der Elektrode notwendige Widerstandsstrom bei einem den Lichtbogen ausschließlich mittels Hintergrundstrom aufrechterhaltenden Stromniveau nicht zur Verfügung steht. Der Hintergrundstrom dient mithin nur zum Aufrechterhalten des Lichtbogens und des Tropfens aus geschmolzenem Metall im Schmelzzustand. Die Menge an geschmolzenem Metall am Elektrodenende, die durch die Plasmaverstärkung und das Plasma gebildet wird, ist derart gewählt, daß sie ein vorbestimmtes Volumen von geschmolzenem Metall am Elektrodenende abschmilzt, und der Plasmaabschnitt des Stroms wird auf Hintergrundstrom abgesenkt, sobald das vorbestimmte Volumen erhalten wird. Die Dauer des Plasmaverstärkungs- und Plasmaabschnitts kann ebenfalls gewählt werden. Während der Ausbildung des geschmolzenen Metallballs am Elektrodenende im Plasmaabschnitt des Stroms stoßen die Strahlkräfte des Hochstroms das geschmolzene Metall vom Schweißbad ab, bis die vorgewünschte Menge von geschmolzenem Metall vom Elektrodenende aufgeschmolzen wurde. Sobald der Strom reduziert wird, kann sich geschmolzenes Metall zu einer Kugel ausbilden und das Schmelzbad kann sich stabilisieren, wodurch ein gleichmäßiger Kontakt zwischen dem im wesentlichen sphärischen Ball und dem unterdrückten Schweißmetallbad entsteht. Die am Elektrodenende gewünschte Menge an geschmolzenem Metall wird durch Richten einer vorgewählten Energiemenge oder Wattleistung während des Plasmaabschnitts des Schweißzyklus in die Elektrode hinein gesteuert. Zu jeder Zeit, zu der sich der Schmelzmetallball am Elektrodenende ausbildet, wird der Schmelzball mittels Schutzgas gegenüber der Atmosphäre abgeschirmt. Die Schutzgaszuströmung wird fortgesetzt, bis der aufgeschmolzene Ball in das aufgeschmolzene Metall hinein übertragen wurde.

Sobald sich der aufgeschmolzene Metallball während des Plasmaverstärkungs- und Plasmaabschnitts des Schweißzyklus ausgebildet hat, wird der geschmolzene Ball durch Vorschieben der Elektrode in das Schmelzbad hineingezogen, wodurch ein Kurzschlußzustand gebildet wird. Wenn der aufgeschmolzene Metallball das aufgeschmolzene Metallbad erreicht, wird er durch Oberflächenspannungen in das Bad gezogen. Hieraus resultiert ein allerletztes Einschnüren des sich zwischen dem Bad und dem Elektrodendraht erstreckenden geschmolzenen Metalls, und anschließend tritt ein Abriß und eine Trennung des Balls von dem Draht auf. Da während der Trennung nur ein niedriger Hintergrundstrom vorhanden ist, kann nur wenig Spritzen auftreten. Vorzugsweise überwacht der Stromsteuerschaltkreis das Einschnüren des geschmolzenen Metallballs derart, daß der Stromfluß während der Pinchkurve stärker ansteigt, wenn sich die Einschnürung äußerst schnell im Durchmesser durch elektrische Löcher reduziert, bis ein drohender Durchschlag detektiert wird. Sobald die Detektion eines drohenden Durchschlags auftritt, wird der Strom auf das Hintergrundstromniveau abgesenkt, bis das geschmolzene Metall am Elektrodenende in das Schmelzbad übertritt.

Während des Schweißzyklus kann der Strom jederzeit positiv, jederzeit negativ oder eine Kombination von positiven und negativen Pulsen sein. Für alternierende Polaritätsprofile werden die Anzahl von Stromzyklen positiver Polarität und negativer Polarität gesteuert, um die gewünschte Erwärmung in dem geschmolzenen Metalpuddel des Schweißvorgangs zu erhalten. Falls der Puddel zu kalt ist, wird die Anzahl der Zyklen 320 mit negativer Polarität relativ zu der Anzahl der Zyklen positiven Stroms gesteigert. Das gewünschte Verhältnis wird durch einen geeigneten Auswahlschaltkreis im Schweißkontroller erhalten.

Es kann auch ein alternatives Steuerkonzept eingesetzt werden, bei dem jeder Schweißzyklus anfänglich ein Standardzyklus mit negativer Polarität ist, der anschließend zu einem vorbestimmten Zeitpunkt im Zyklus in einen Zyklus mit positiver Polarität umgeschaltet wird. Gemäß einem Erfindungsaspekt kann die Polarität des schnell erzeugten Strompulses umgeschaltet werden, nachdem der Plasmaverstärkungsabschnitt geendet hat. Hierdurch wird der Schlußflankenabschnitt in einen Negativabschnitt und einen Positivabschnitt mit schlagartiger Polaritätsumkehr unterteilt. Im Anschluß hat der Stromzyklus eine positive Polarität bis zum Ende des Zyklus. Auf diese Weise wird die Schweißpuddelhitze durch Auswahl der Zeitverzögerung der Polaritätsumkehr beim Schweißzyklus bestimmt. Um bei einer STT-Schweißvorrichtung zur Steuerung der Hitze beim Schweißprozeß zwischen einer positiven Polarität und einer negativen Polarität der Strompulse hin- und herzuschalten, könnten weitere Modifikationen vorgenommen werden.

Die Erfindung wurde unter Bezugnahme auf bevorzugte Ausführungsbeispiele und Alternativen hiervon beschrieben. Es sollte zugestanden werden, daß für den Fachmann zahlreiche Modifikationen und Änderungen der hier offenbarten Ausführungsform aus der vorhergehenden, detaillierten Beschreibung der Erfindung ersichtlich sind. Derartige Abweichungen und Modifikationen sollen in den Schutzbereich der Erfindung eingeschlossen sein, so lange diese im Schutzumfang der Ansprüche beinhaltet sind.

## Patentansprüche

1. Lichtbogenschweißvorrichtung zum Ausbilden einer Schweißraupe auf einem Werkstück (30), aufweisend eine elektrische Energiequelle (90), einen Schweißachaltkreis (200), und eine Schweißelektrode, **dadurch gekennzeichnet, daß** die elektrische Energiequelle (90) zumindest eine Brennstoffzelle (100) umfaßt, die Spannung und Strom für den Schweißschaltkreis (200) erzeugt, um zumindest teilweise ein Ausbilden eines elektrischen Lichtbogens zwischen Elektrode (60) und Werkstück (30) zu erzwingen, wobei die Brennstoffzelle (100) eine Anode, eine Kathode und zumindest eine zwischen der Anode und der Kathode angeordnete, protonenleitende Feststoff-Polymermembran, ein organisches Versorgungsmittel und einen Mechanismus beinhaltet, mit dem das organische Versorgungsmittel an der Anode vorbeiführbar ist, wobei die Brennstoffzelle (100) wenigstens ein Gasreaktionsprodukt bildet, das einer Schutzgasquelle (80) und/oder einem Lichtbogenschweißbrenner (20) über eine Leitung (84; 82) zugeführt und zumindest teilweise als Schutzgas während der Ausbildung der Schweißraupe verwendet wird.

2. Vorrichtung nach Anspruch 1, wobei die elektrische Energiequelle (90) eine Mehrzahl von Brennstoffzellen, insbesondere einen Zellenstapel (110) aus Brennstoffzellen umfaßt.

3. Vorrichtung nach Anspruch 1 oder 2, **dadurch gekennzeichnet, daß** die Brennstoffzelle flüssiggespeist ist.

4. Vorrichtung nach einem der Ansprüche 1 bis 4, **gekennzeichnet durch** eine mit dem Gasreaktionsprodukt versorgte Schutzgasquelle (80), die vorzugsweise als Verarbeitungseinheit ausgebildet ist und einen Gasreiniger, einen Kompressor, einen Gastrockner und/oder einen Kondensator umfaßt.

5. Vorrichtung nach einem der Ansprüche 1 bis 4, **dadurch gekennzeichnet, daß** die Brennstoffzelle eine indirekte Brennstoffzelle, eine direkte Brennstoffzelle oder eine Kombination aus indirekter und direkter Brennstoffzelle ist.

6. Vorrichtung nach einem der Ansprüche 1 bis 5, **dadurch gekennzeichnet daß** das organische Versorgungsmittel (Brennstoffmittel) aus Methanol, Formaldehyd, Formylsäure, Dimethoxymethan, Trimethoxymethan, Trioxan oder aus Kombinationen hieraus besteht.

7. Vorrichtung nach einem der Ansprüche 1 bis 6, **dadurch gekennzeichnet, daß** das Gasreaktionsprodukt eine Kohlenstoffbindung aufweist, die insbesondere ein Gas aus der Gruppe von Kohlenmonoxyd, Kohlendioxyd oder Mischungen hieraus aufweist.

8. Vorrichtung nach einem der Ansprüche 1 bis 7, **dadurch gekennzeichnet, daß** die Anode aus einem Metall besteht, das aus der Gruppe von Platin-Rutheniumlegierung, Platin-Zinn, Platin-Iridium, Platin-Osmium, Platin-Renium oder Mischungen daraus ausgewählt ist.

9. Vorrichtung nach einem der Ansprüche 1 bis 8, **dadurch gekennzeichnet, daß** die protonleitende Polymermembran ein Material aufweist, das aus einer Gruppe ausgewählt ist, die aus einem Copolymer von Tetrafluorethylen und perfluorinierter Sulfonsäure, perfluoriniertem Sulfonsäurepolymer, Polykohlenwasserstoff-Sulfonsäure oder eine Mischung daraus besteht.

10. Vorrichtung nach einem der Ansprüche 1 bis 9, **dadurch gekennzeichnet, daß** die protonleitende Polymermembran einen Katalysator umfaßt, der ein Material aufweist, das aus der Gruppe ausgewählt ist, die aus Ir,Mo,Nb,Nu,Os,Pd,Pt,Re,Ru, RuO₂, Sn, SnO₂, Ti, W, WO₃, Zr oder Kombinationen hieraus besteht.

11. Vorrichtung nach einem der Ansprüche 1 bis 10, **gekennzeichnet durch** wenigstens zwei protonleitende, feste Polymermembranen, wobei die eine der Polymermembranen eine andere Zusammensetzung als die andere Polymermembran hat.

12. Vorrichtung nach einem der Ansprüche 1 bis 11, **dadurch gekennzeichnet, daß** die Kathode Platin aufweist.

13. Vorrichtung nach einem der Ansprüche 1 bis 12, **dadurch gekennzeichnet, daß** der Schweißschaltkreis (200) die Spannung der elektrischen Energiequelle (90) verstärkt.

14. Vorrichtung nach Anspruch 13, **dadurch gekennzeichnet, daß** der Schweißschaltkreis (200) einen Schweißstromschaltkreis umfaßt, der die Elektrode (60) mit Strom versorgt, wobei der Schweißstromschaltkreis eine erste Schaltung zum Erzeugen eines Übergangsstroms und eine zweite Schaltung zum Erzeugen eines Schmelzstroms aufweist, wobei die zweite Schaltung eine ausreichende Menge von Strom an die Elektrode liefert, um die Schweißraupe auf dem Werkstück (30) auszubilden.

15. Vorrichtung nach Anspruch 14, **dadurch gekennzeichnet, daß** die zweite Schaltung eine vorgewählte Energiemenge zum Schweißdraht (60) lenkt, um ein vergleichsweise konstantes Volumen der Elektrode während jedem Schweißzyklus abzuschmelzen.

16. Vorrichtung nach Anspruch 14 oder 15, **dadurch gekennzeichnet, daß** die zweite Schaltung die an die Elektrode (60) gelieferte Strommenge reduziert, bevor geschmolzenes Material an der Elektrode einen Kurzschluß mit dem Werkstück (30) bildet.

17. Vorrichtung nach einem der Ansprüche 14 bis 16, **dadurch gekennzeichnet, daß** die erste Schaltung einen Hochstrompuls am Ende eines Kurzschlußzustands zwischen der Elektrode (60) und dem Werkstück (30) liefert und daß der Puls bis kurz vor einer vorberechneten Beendigung des Kurzschlußzustandes angelegt bleibt.

18. Vorrichtung nach einem der Ansprüche 13 bis 17, **dadurch gekennzeichnet, daß** die erste Schaltung die Strommenge am Schweißdraht reduziert, bevor das aufgeschmolzene Material an der Elektrode (60) einen Kurzschlußzustand mit dem Werkstück (30) bildet.

19. Vorrichtung nach einem der Ansprüche 1 bis 18, wobei der Schweißschaltkreis (200) einen Strompolaritätsregler zum Regeln der Polarität zumindest eines Abschnitts des die Elektrode durchfließenden Stroms aufweist.

20. Vorrichtung nach Anspruch 19, **dadurch gekennzeichnet, daß** der Schweißschaltkreis (200) eine Serie von Strompulsen geringer Pulsbreite erzeugt, die einen Schweißzyklus mit einem Kurzschlußübertragungsabschnitt und einem Plasmalichtbogenschmelzabschnitt ausbilden, wobei die Strompulse in dem Zyklus jeweils eine vorgegebene elektrische Polarität haben, die mittels der Polaritätssteureinrichtung zwischen einer ersten Polarität, die positiv ist, und einer zweiten Polarität, die negativ ist, wählbar ist.

21. Vorrichtung nach Anspruch 19 oder 20, **dadurch gekennzeichnet, daß** die Polaritätssteureinrichtung einen Decoder umfaßt, der in einem ersten Zustand zwischen einer ersten oder zweiten Polarität für eine Anzahl von aufeinanderfolgenden Schweißzyklen und in einem zweiten Zustand die jeweils andere Polarität für eine zweite Anzahl von aufeinanderfolgenden Schweißzyklen wählen kann, und einen Mechanismus zum Umschalten zwischen dem ersten und zweiten Zustand im Schweißbetrieb.

22. Vorrichtung nach Anspruch 21, **dadurch gekennzeichnet, daß** jeder Zyklus einen gewünschten Lichtbogenstrom und einen Nebenschlußwiderstand (shunt) zum Abtasten des aktuellen Lichtbogenstroms und einen Fehlerverstärker zum Vergleichen des aktuellen Lichtbogenstroms mit dem erwünschten Lichtbogenstrom aufweist, um die Strompulsbreiten zu steuern.

23. Vorrichtung nach einem der Ansprüche 19 bis 22, **dadurch gekennzeichnet, daß** die Polaritätssteuereinrichtung eine positive oder negative Polarität während eines ersten Abschnitts des durch die Elektrode hindurchgeleiteten Stroms aufrechthält.

24. Vorrichtung nach einem der Ansprüche 19 bis 23, **dadurch gekennzeichnet, daß** der Polaritätssteuerer den Strom während einer ersten Zeitdauer mit positiver Polarität und während einer zweiten Zeitdauer mit negativer Polarität aufrechthält, wobei vorzugsweise die erste Zeitdauer größer als die zweite Zeitdauer ist.

25. Vorrichtung nach einem der Ansprüche 19 bis 24, **dadurch gekennzeichnet, daß** der Schweißschaltkreis einen zentral angezapften Induktor mit einem ersten Abschnitt zum Erzeugen einer ersten Polarität und einem zweiten Abschnitt zum Erzeugen einer zweiten Polarität, einen ersten Schalter zum Verbinden des ersten Induktorabschnitts zwischen der Elektrode und dem Werkstück, einen zweiten Schalter zum Verbinden des zweiten Abschnitts des Induktors zwischen Elektrode und Werkstück, und ein Einstellmittel zum Schließen entweder des ersten Schalters oder des zweiten Schalters während eines vorgegebenen Schweißzyklus, aufweist.

26. Vorrichtung nach einem der Ansprüche 1 bis 25, **dadurch gekennzeichnet, daß** die Elektrode eine abschmelzende Elektrode mit Metallkern und Flußmittel ist.

27. Verfahren zum Ausbilden einer Schweißraupe auf einem Werkstück beim elektrischen Lichtbogenschweißen, mit den Schritten:
a) Bereitstellen einer Elektrode;
b) Bereitstellen einer elektrischen Energiequelle, die einen Strom erzeugt;
c) Bereitstellen eines Schweißschaltkreises, und
d) Liefern des Stromes an den Schweißschaltkreis, um einen Lichtbogen zwischen Elektrode und Werkstück auszubilden,
**dadurch gekennzeichnet, daß** die elektrische Energiequelle von einer Brennstoffzelle (100) gebildet wird, die bei der Energieerzeugung ein Gas bildet, das zumindest teilweise als Schutzgas verwendet wird und während der Ausbildung der Schweißraupe dem Werkstück zugeführt wird.

28. Verfahren nach Anspruch 27, **dadurch gekennzeichnet, daß** der Schweißschaltkreis (200) zumindest teilweise die Wellenform des die Elektrode durchfließenden Stroms steuert.

29. Verfahren nach Anspruch 27 oder 28, **dadurch gekennzeichnet, daß** die Elektrode eine abschmelzende Metallseelendrahtelektrode ist.

30. verfahren nach einem der Ansprüche 27 bis 29, **dadurch gekennzeichnet, daß** mit dem Schweißschaltkreis eine elektrische Wellenform an der Elektrode ausgebildet wird, die einen Kurzschlußübertragungsabschnitt und einen kontrollierten Sohmelzabschnitt aufweist.

31. Verfahren nach Anspruch 30, **dadurch gekennzeichnet, daß** der gesteuerte Schmelzabschnitt gebildet wird durch Anlegen einer vorbestimmten Energiemenge an der Elektrode oder Anlegen einer vorbestimmten Leistungsmenge an der Elektrode.

32. Verfahren nach einem der Ansprüche 27 bis 31, **dadurch gekennzeichnet, daß** der Schweißschaltkreis einen Hintergrundstrom erzeugt, wobei der Hintergrundstrom eine Komponente mit hoher Induktanz und ein Niedrigniveau hat, das gerade oberhalb desjenigen Niveaus liegt, um einen Lichtbogen zwischen Elektrode und Werkstück während des gesamten Schweißzyklus zu erhalten.

33. Verfahren nach einem der Ansprüche 27 bis 31, **dadurch gekennzeichnet, daß** der Schweißschaltkreis die Polarität der an die Elektrode gelieferten Wellenform steuert.

34. Verfahren nach Anspruch 33, **dadurch gekennzeichnet, daß** die elektrische Wellenform eine Serie kurzer Strompulsbreiten aufweist, die jeweils eine vorgegebene elektrische Polarität haben.

35. Verfahren nach Anspruch 33 oder 34, **dadurch gekennzeichnet, daß** die Polarität der elektrische Welle während des Schweißzyklus zwischen einer Pluspolarität und einer Minuspolarität hin- und hergeschaltet wird.

36. Verfahren nach einem der Ansprüche 33 bis 35, **dadurch gekennzeichnet, daß** die Polarität der elektrischen Welle als Funktion der an Elektrode und Werkstück angelegten, aufsummierten Energiemenge in der einer Polarität bzw. der an Werkstück und Elektrode in der anderen Polarität angelegten, aufsummierten Energiemenge gewechselt wird.

37. Verfahren nach einem der Ansprüche 27 bis 36, wobei der Schweißschaltkreis die Spannung der elektrischen Energiequelle verstärkt.

38. Verfahren nach einem der Ansprüche 27 bis 37, **dadurch gekennzeichnet, daß** die Brennstoffzelle aus einer indirekten Brennstoffzelle, einer direkten Brennstoffzelle oder einer Kombination hieraus besteht.

39. Verfahren nach einem der Ansprüche 27 bis 38, **dadurch gekennzeichnet, daß** die Brennstoffzelle mit organischem Brennstoff gespeist wird, wobei der organische Brennstoff aus einer Gruppe ausgewählt ist, die Methanol, Formaldehyd, Formylsäure, Dimethoxymethan, Trimethoxymethan, Trioxan oder Kombinationen enthält.

40. Verfahren nach einem der Ansprüche 27 bis 39, wobei die Brennstoffzelle mit flüssigem Brennstoff gespeist wird.

41. Verfahren nach einem der Ansprüche 27 bis 40, wobei das Gas erst einer Schutzgas-Verarbeitungseinheit (80) zugeführt wird.

42. Verfahren nach einem der Ansprüche 27 bis 41, wobei die Brennstoffzelle eine Anode, eine Kathode und zumindest eine zwischen Anode und Kathode angeordnete feste, protonleitende Polymermembran umfaßt.

43. Verfahren nach einem der Ansprüche 27 bis 42, wobei die Brennstoffzelle als Zellenstapel (110) aus einer Mehrzahl von Brennstoffzellen (100) gebildet wird.

## Claims

1. An electric arc welding apparatus for forming a welding bead on a work piece (30) comprising an electric energy source (90), a welding circuit (200) and a welding electrode, **characterised in that** said electric energy source (90) includes at least one fuel cell (100) that provides voltage and current to said welding circuit (200) to cause at least partially an electric arc to form between said electrode (60) and said work piece (30), said fuel cell including an anode, a cathode, at least one solid polymer proton conductor membrane positioned between the anode and cathode, an organic feed, and a mechanism to pass the organic feed past that anode, said fuel cell (100) forms a gas product which is directed to a shielding gas source (80) and/or to an arc welder (20) by a gas line (84; 82) and can at least partially be used as a shielding gas during forming of the weld bead.

2. Apparatus as defined in claim 1, wherein said electric energy source (90) includes a plurality of fuel cells, particularly a stack (110) of fuel cells.

3. Apparatus as defined in claim 1 or 2, **characterised in that** said fuel cell includes a liquid feed.

4. Apparatus as defined in any of the claims 1 to 3, **characterised in that** said shielding gas source (80) is supplied by said gas product, preferentially is constructed as a processing unit and comprises a gas cleaner, a compressor, a gas dryer and/or a capacitor.

5. Apparatus as defined in any of the claims 1 to 4, **characterised in that** said fuel cell is an indirect fuel cell, a direct fuel cell or a combination of a indirect or direct fuel cell.

6. Apparatus as defined in any of the claims 1 to 5, **characterised in that** said organic feed (fuel mean) consists of methanol, formaldehyde, formic acid, dimethoxymethane, trimethoxymethane, trioxane and combinations thereof.

7. Apparatus as defined in any of the claims 1 to 6, **characterised in that** said gas reaction product includes a carbon compound, which particularly includes carbon monoxide, carbon dioxide or combinations thereof.

8. Apparatus as defined in any of the claims 1 to 7, **characterised in that** said anode includes a metal selected from the group consisting of platinum-ruthenium alloy, platinum-tin, platinum-iridium, platinum-osmium, platinum-rhenium or mixtures thereof.

9. Apparatus as defined in any of the claims 1 to 8, **characterised in that** said solid polymer proton conductor membrane includes a material selected from the group consisting of co-polymer of tetrafluoroethylene and perflourinated sulfonic acid, perflourinated sulfonic acid polymer, polyhdrocarbon sulfonic acid or mixtures thereof.

10. Apparatus as defined in any of the claims 1 to 9, **characterised in that** said solid polymer proton conductor membrane includes a catalyst, said catalyst including a material selected from the group consisting of Ir, Mo, Nb, Nu, Os, Pd, Pt, Re, Ru, RuO₂, Sn, SnO₂, Ti, W, WO₃, Zr, or combinations thereof.

11. Apparatus as defined in any of the claims 1 to 10, **characterised by** including at least two solid polymer proton conductor membranes, one of said solid polymer proton conductor membranes having a different composition from another of said solid polymer proton conductor membranes.

12. Apparatus as defined in any of the claims 1 to 11, **characterised in that** said cathode includes platinum.

13. Apparatus as defined in any of the claims 1 to 12, **characterised in that** said welding circuit (200) boosts the voltage of said electric energy source (90).

14. Apparatus as defined in claim 13, **characterised in that** said welding circuit (200) includes a welding current circuit that supplies current to said electrode (60), said welding current circuit including a first circuit to create a transfer current and a second circuit to create a melting current, said second circuit supplying a sufficient mount of current to said electrode to form that weld bead on said workpiece (30).

15. Apparatus as defined in claim 14, **characterised in that** said second circuit directing a preselected amount of energy to said welding wire (60) to melt a relatively constant volume of said electrode during each welding cycle.

16. Apparatus as defined in claim 14 or 15, **characterised in that** said second circuit reducing the amount of current to said electrode (60) prior to molten metal on said electrode forming a short circuit with said workpiece (30).

17. Apparatus as defined in any of the claims 14 to 16, **characterised in that** said first circuit directing a high current pulse at the end of a short circuit condition between said electrode (60) and said workpiece (30) and applying said pulse until just prior to a predicted termination of the short circuit condition.

18. Apparatus as defined in any of the claims 13 to 17, **characterised in that** said first circuit reducing the amount of current to said welding wire prior to said molten metal on said electrode (60) forming a short circuit condition with said workpiece (30).

19. Apparatus as defined in any of the claims 1 to 18, **characterised in that** said welding circuit (200) including a current polarity controller to control the polarity of at least a portion of the current passing through said electrode.

20. Apparatus as defined in claim 19, **characterised in that** said welding circuit (200) created a series of small width current pulses constituting a welding cycle with a short circuit transfer portion and a plasma arc melting portion, said current pulses in said cycle each having a given electrical polarity, said polarity controller selecting the polarity of said pulses in said cycle between a first polarity being positive and a second polarity being negative.

21. Apparatus as defined in claim 19 or 20, **characterised in that** said polarity controller includes a decoder with a first condition for selecting one of said first or second polarity for a first number of consecutive welding cycles and a second condition for selecting the other or said polarity for a second number of consecutive welding cycles and a mechanism to alternate between said first and second conditions during a welding operation.

22. Apparatus as defined in claim 21, **characterised in that** said cycles each have a desired arc current and including a shunt to sense the actual arc current and an error amplifier to compare said actual arc current with said desired arc current to control the width of said current pulses.

23. Apparatus as defined in any of the claims 19 to 22, **characterised in that** said polarity controller maintaining a positive or a negative polarity during a first portion of said current passing through said electrode.

24. Apparatus as defined in any of the claims 19 to 23, **characterised in that** said polarity controller maintaining said current in a positive polarity for a first duration of time and maintaining the current in a negative polarity for a second duration of time, said first duration being particularly greater than said second duration.

25. Apparatus as defined in any of the claims 19 to 24, **characterised in that** said welding circuit includes a center tapped inductor with a first portion to create said first polarity and a second portion to create said second polarity, a first switch for connecting said first portion of said inductor between said electrode and said workpiece, a second switch for connecting said second portion of said inductor between said electrode and said workpiece, and a selector to close either said first switch or said second switch during a given weld cycle.

26. Apparatus as defined in any of the claims 1 to 25, **characterised in that** said electrode is a consumable flux cored metal electrode.

27. Method of electric arc welding to form a weld bead on a workpiece, with the steps:
a) providing an electrode;
b) providing an electric energy source which produces a current;
c) providing a welding circuit, and
d) supplying said current to said welding circuit to form an arc between said electrode and said workpiece,
**characterised in that** said electric energy source is a fuel cell (100) that forms a gas when generating energy, which gas is at least partially used as a shielding gas and is directed to the workpiece during forming of the weld bead.

28. Method as defined in claim 27, **characterised in that** said welding circuit (200) at least partially controlling the wave shape of said current to said electrode.

29. Method as defined in claim 27 or 28, **characterised in that** said electrode is a consumable flux cored metal electrode.

30. Method as defined in any of the claims 27 to 29, **characterised in that** said welding circuit forming an electric wave to said electrode comprising a short circuit transfer portion and a controlled melting portion.

31. Method as defined in claim 30, **characterised in that** said control melting portion is formed by applying a preselected amount of energy to the electrode or applying a preselected amount of power to said electrode.

32. Method as defined in any of the claims 27 to 31, **characterised in that** said welding circuit forming a background current, said background current having a high inductance component and a low level just above the level necessary to sustain an arc between said electrode and said workpiece throughout each welding cycle.

33. Method as defined in any of the claims 27 to 32, **characterised in that** said welding circuit controls the polarity of the electric wave to said electrode.

34. Method as defined in claim 33, **characterised in that** said electric wave includes a series of small width current pulses each having a given electrical polarity.

35. Method as defined in claim 33 or 34, **characterised in that** the polarity of said electric wave is shifted between a first polarity and a second polarity during the welding cycle.

36. Method as defined in any of the claims 33 to 35, **characterised in that** the polarity of said electric wave is alternated as a function of the cumulative amount of energy applied to said electrode and said workpiece in one polarity and the cumulative amount of energy applied to said electrode and said workpiece in the other polarity.

37. Method as defined in any of the claims 27 to 36, **characterised in that** said welding circuit boosts the voltage of said electric energy source.

38. Method as defined in any of the claims 27 to 37, **characterised in that** said fuel cell consists of an indirect fuel cell, a direct fuel cell or combinations thereof.

39. Method as defined in any of the claims 27 to 38, **characterised in that** said fuel cell includes an organic feed and is selected from the group consisting of an methanol, formaldehyde, formic acid, dimethoxymethane, trimethoxymethane, trioxane or combinations thereof.

40. Method as defined in any of the claims 27 to 39, **characterised in that** said fuel cell is fed with a liquid fuel.

41. Method as defined in any of the claims 27 to 40, **characterised in that** said gas is first fed to a shielding gas processing unit (80).

42. Method as defined in any of the claims 27 to 41, **characterised in that** the said fuel cell includes an anode, a cathode, and at least one solid polymer proton conductor membrane positioned between said anode and said cathode.

43. Method as defined in any of the claims 27 to 42, **characterised in that** the fuel cell includes a stack (110) of a plurality of fuel cells (100).

## Revendications

1. Dispositif de soudage à l'arc électrique pour réaliser un cordon de soudure sur une pièce à oeuvrer (30), présentant une source d'énergie électrique (90), un circuit de commutation de soudage (200) et une électrode de soudage, **caractérisé en ce que** la source d'énergie électrique (90) comporte au moins une cellule de combustible (100) qui génère une tension et un courant pour le circuit de commutation de soudage (200) afin de forcer au moins partiellement une réalisation d'un arc électrique entre l'électrode (60) et la pièce à oeuvrer (30), dispositif dans lequel :
- la cellule de combustible (100) contient une anode, une cathode et au moins une membrane en polymère ferme agencée entre l'anode et la cathode et conduisant des protons, un moyen d'alimentation organique et un mécanisme avec lequel le moyen d'alimentation organique peut être guidé en passant juste devant l'anode ; et
- la cellule de combustible (100) forme au moins un produit de réaction gazeux qui est amené vers une source de gaz protecteur (80) et/ou vers un chalumeau de soudage à l'arc (20) par l'intermédiaire d'une conduite (84 ; 82) et qui est utilisé au moins partiellement comme gaz protecteur pendant la réalisation du cordon de soudure.

2. Dispositif selon la revendication 1, **caractérisé en ce que** la source d'énergie électrique (90) comporte une pluralité de cellules de combustible, en particulier une pile (110) de cellules de combustible.

3. Dispositif selon l'une ou l'autre des revendications 1 et 2, **caractérisé en ce que** la cellule de combustible est alimentée en liquide.

4. Dispositif selon l'une des revendications 1 à 4, **caractérisé par** une source de gaz protecteur (80) alimentée avec le produit de réaction gazeux, laquelle est réalisée de préférence comme unité de traitement et laquelle comporte un épurateur de gaz, un compresseur, un dessiccateur de gaz et/ou un condensateur.

5. Dispositif selon l'une des revendications 1 à 4, **caractérisé en ce que** la cellule de combustible est une cellule de combustible indirecte, une cellule de combustible directe ou une combinaison d'une cellule de combustible indirecte et directe.

6. Dispositif selon l'une des revendications 1 à 5, **caractérisé en ce que** le moyen d'alimentation organique (moyen combustible) est constitué de méthanol, de formaldéhyde, d'acide formique, de diméthoxyméthane, de triméthoxyméthane, de trioxane ou d'une combinaison de ceux-ci.

7. Dispositif selon l'une des revendications 1 à 6, **caractérisé en ce que** le produit de réaction gazeux présente une liaison de carbone qui présente en particulier un gaz du groupe de monoxyde de carbone, de dioxyde de carbone ou de mélanges de ceux-ci.

8. Dispositif selon l'une des revendications 1 à 7, **caractérisé en ce que** l'anode est constituée d'un métal qui est choisi parmi le groupe d'alliage de platine-ruthénium, de platine-étain, de platine-iridium, de platine-osmium, de platine-rhénium ou de mélanges de ceux-ci.

9. Dispositif selon l'une des revendications 1 à 8, **caractérisé en ce que** la membrane en polymère conduisant des protons présente un matériau qui est choisi parmi un groupe qui est constitué d'un copolymère de tétrafluoréthylène et d'acide sulfonique perfluoré, de polymère d'acide sulfonique perfluoré, d'acide sulfonique de polyhydrocarbure ou d'un mélange de ceux-ci.

10. Dispositif selon l'une des revendications 1 à 9, **caractérisé en ce que** la membrane en polymère conduisant des protons comporte un catalyseur qui présente un matériau choisi parmi le groupe constitué de : Ir, Mo, Nb, Nu, Os, Pd, Pt, Re, Ru, RuO₂, Sn, SnO₂, Ti, W, WO₃, Zr ou de combinaisons de ceux-ci.

11. Dispositif selon l'une des revendications 1 à 10, **caractérisé par** au moins deux membranes fermes en polymère conduisant des protons, la une des membranes en polymère ayant une autre composition que l'autre membrane en polymère.

12. Dispositif selon l'une des revendications 1 à 11, **caractérisé en ce que** la cathode présente du platine.

13. Dispositif selon l'une des revendications 1 à 12, **caractérisé en ce que** le circuit de commutation de soudage (200) amplifie la tension de la source d'énergie électrique (90).

14. Dispositif selon la revendication 13, **caractérisé en ce que** le circuit de commutation de soudage (200) comporte un circuit de commutation de courant de soudage qui alimente l'électrode (60) en courant, dans lequel :
- le circuit de commutation de courant de soudage présente un premier circuit pour générer un courant de transition et un second circuit pour générer un courant de fusion ; et
- le second circuit livre une quantité suffisante de courant à l'électrode pour réaliser le cordon de soudure sur la pièce à oeuvrer (30).

15. Dispositif selon la revendication 14, **caractérisé en ce que** le second circuit dirige une quantité d'énergie présélectionnée vers l'électrode à fil plein (60) afin de fondre un volume comparativement constant de l'électrode pendant chaque cycle de soudage.

16. Dispositif selon l'une ou l'autre des revendications 14 et 15, **caractérisé en ce que** le second circuit réduit la quantité de courant livrée à l'électrode (60) avant que du matériau fondu forme sur l'électrode un court-circuit avec la pièce à oeuvrer (30).

17. Dispositif selon l'une des revendications 14 à 16, **caractérisé en ce que** le premier circuit livre une impulsion de courant fort entre l'électrode (60) et la pièce à oeuvrer (30) à la fin d'un état de court-circuit et **en ce que** l'impulsion reste appliquée jusque juste avant une terminaison de l'état de court-circuit, laquelle peut être pré-calculée.

18. Dispositif selon l'une des revendications 13 à 17, **caractérisé en ce que** le premier circuit réduit la quantité de courant sur l'électrode à fil plein avant que le matériau fondu forme sur l'électrode (60) un état de court-circuit avec la pièce à oeuvrer (30).

19. Dispositif selon l'une des revendications 1 à 18, dans lequel le circuit de commutation de soudage (200) présente un régulateur de polarité de courant pour réguler la polarité d'au moins une section du courant qui passe à travers l'électrode.

20. Dispositif selon la revendication 19, **caractérisé en ce que** le circuit de commutation de soudage (200) génère une série d'impulsions de courant d'une faible largeur d'impulsion, lesquelles réalisent un cycle de soudage avec une section de transmission de court-circuit et une section de fusion à arc-plasma, dans lequel les impulsions de courant ont respectivement dans le cycle une polarité électrique prescrite qui peut être choisie entre une première polarité qui est positive et une seconde polarité qui est négative au moyen du dispositif de commande de polarité.

21. Dispositif selon l'une ou l'autre des revendications 19 et 20, **caractérisé en ce que** le dispositif de commande de polarité comporte un décodeur qui peut choisir dans un premier état entre une première ou une seconde polarité pour un certain nombre de cycles de soudage successifs et dans un second état la polarité respectivement autre pour un second nombre de cycles de soudage successifs, et un mécanisme pour commuter entre le premier et le second état pendant l'opération de soudage.

22. Dispositif selon la revendication 21, **caractérisé en ce que** chaque cycle présente un courant d'arc désiré et une résistance de dérivation (shuntage) pour explorer le courant d'arc actuel, et un amplificateur d'erreurs pour comparer le courant d'arc actuel au courant d'arc désiré afin de commander les largeurs d'impulsion de courant.

23. Dispositif selon l'une des revendications 19 à 22, **caractérisé en ce que** le dispositif de commande de polarité maintient une polarité positive ou négative pendant un premier secteur du courant qui se propage à travers l'électrode.

24. Dispositif selon l'une des revendications 19 à 23, **caractérisé en ce que** le dispositif de commande de polarité maintient le courant avec une polarité positive pendant une première durée de temps et avec une polarité négative pendant une seconde durée de temps, la première durée de temps étant de préférence plus grande que la seconde durée de temps.

25. Dispositif selon l'une des revendications 19 à 24, **caractérisé en ce que** le circuit de commutation de soudage présente :
- un inducteur à prélèvement central comprenant un premier secteur pour générer une première polarité et un second secteur pour générer une seconde polarité ;
- un premier commutateur pour relier le premier secteur d'inducteur entre l'électrode et la pièce à oeuvrer ;
- un second commutateur pour relier le second secteur de l'inducteur entre l'électrode et la pièce à oeuvrer ; et
- un moyen d'ajustage pour fermer soit le premier commutateur, soit le second commutateur pendant un cycle de soudage prescrit.

26. Dispositif selon l'une des revendications 1 à 25, **caractérisé en ce que** l'électrode est une électrode fusible avec noyau en métal et décapant de soudage.

27. Procédé pour réaliser un cordon de soudure sur une pièce à oeuvrer pendant le soudage à l'arc électrique, comprenant les étapes suivantes :
a) mise à disposition d'une électrode ;
b) mise à disposition d'une source d'énergie électrique qui génère un courant ;
c) mise à disposition d'un circuit de commutation de soudage ; et
d) livraison du courant au circuit de commutation de soudage afin de réaliser un arc entre l'électrode et la pièce à oeuvrer,
**caractérisé en ce que** la source d'énergie électrique est formée par une cellule de combustible (100) qui forme un gaz pendant la génération d'énergie, lequel est utilisé au moins partiellement comme gaz protecteur et est amené vers la pièce à oeuvrer pendant la réalisation du cordon de soudure.

28. Procédé selon la revendication 27, **caractérisé en ce que** le circuit de commutation de soudage (200) commande au moins partiellement la forme d'onde du courant qui passe à travers l'électrode.

29. Procédé selon l'une ou l'autre des revendications 27 et 28, **caractérisé en ce que** l'électrode est une électrode fusible à fil en âme de métal.

30. Procédé selon l'une des revendications 27 à 29, **caractérisé en ce qu'**une forme d'onde électrique est réalisée sur l'électrode avec le circuit de commutation de soudage, laquelle présente un secteur de transmission de court-circuit et un secteur de fusion contrôlé.

31. Procédé selon la revendication 30, **caractérisé en ce que** le secteur de fusion commandé est formé par l'application d'une quantité d'énergie prédéterminée sur l'électrode ou par l'application d'une quantité de puissance prédéterminée sur l'électrode.

32. Procédé selon l'une des revendications 27 à 31, **caractérisé en ce que** le circuit de commutation de soudage génère un courant d'arrière-plan, le courant d'arrière-plan ayant un composant avec une haute inductance et un bas niveau qui se trouve juste au-dessus de ce niveau-ci pour obtenir un arc entre l'électrode et la pièce à oeuvrer pendant tout le cycle de soudage.

33. Procédé selon l'une des revendications 27 à 31, **caractérisé en ce que** le circuit de commutation de soudage commande la polarité de la forme d'onde livrée à l'électrode.

34. Procédé selon la revendication 33, **caractérisé en ce que** la forme d'onde électrique présente une série de courtes largeurs d'impulsions qui ont respectivement une polarité électrique prescrite.

35. Procédé selon l'une ou l'autre des revendications 33 et 34, **caractérisé en ce que** la polarité de l'onde électrique pendant le cycle de soudage est commutée en va-et-vient entre une polarité « plus » et une polarité « moins ».

36. Procédé selon l'une des revendications 33 à 35, **caractérisé en ce que** la polarité de l'onde électrique est commutée sur la une polarité en fonction de la quantité d'énergie totalisée et appliquée sur l'électrode et sur la pièce à oeuvrer, ou sur l'autre polarité en fonction de la quantité d'énergie totalisée et appliquée sur la pièce à oeuvrer et sur l'électrode.

37. Procédé selon l'une des revendications 27 à 36, dans lequel le circuit de commutation de soudage amplifie la tension de la source d'énergie électrique.

38. Procédé selon l'une des revendications 27 à 37, **caractérisé en ce que** la cellule de combustible est constituée d'une cellule de combustible indirecte, d'une cellule de combustible directe ou d'une combinaison de celles-ci.

39. Procédé selon l'une des revendications 27 à 38, **caractérisé en ce que** la cellule de combustible est alimentée avec du combustible organique, le combustible organique étant choisi parmi un groupe qui contient du méthanol, du formaldéhyde, de l'acide formique, du diméthoxyméthane, du triméthoxyméthane, du trioxane ou des combinaisons de ceux-ci.

40. Procédé selon l'une des revendications 27 à 39, dans lequel la cellule de combustible est alimentée avec du combustible liquide.

41. Procédé selon l'une des revendications 27 à 40, dans lequel le gaz est tout d'abord amené vers une unité de traitement de gaz protecteur (80).

42. Procédé selon l'une des revendications 27 à 41, dans lequel la cellule de combustible comporte une anode, une cathode et au moins une membrane ferme en polymère conduisant des protons et agencée entre l'anode et la cathode.

43. Procédé selon l'une des revendications 27 à 42, dans lequel la cellule de combustible est formée comme pile de cellules (110) à partir d'une pluralité de cellules de combustible (100).
